# EUROPÄISCHE PATENTSCHRIFT

(11) **EP 2 468 379 B1**
(45) Veröffentlichungstag und Bekanntmachung des Hinweises auf die Patenterteilung: **22.04.2015**
(21) Anmeldenummer: 11193746.2
(22) Anmeldetag: 15.12.2011
(51) Int. Cl.: B01D 33/00, B01D 33/067, B01D 33/09, B01D 33/46

(54) **Filtervorrichtung**
Filter device
Dispositif de filtre

(30) Priorität: 27.12.2010 DE 102010061560
(43) Veröffentlichungstag der Anmeldung: 27.06.2012
(73) Patentinhaber: Andritz KMPT GmbH, 85256 Vierkirchen (DE)
(72) Erfinder: Grim, Gunnar, 85258 Weichs (DE); Hegnauer, Bruno, 82131 Gauting (DE)
(74) Vertreter: Viering, Jentschura & Partner Patent- und Rechtsanwälte

(56) Entgegenhaltungen:
- EP-A1- 0 033 371
- DE-A1- 2 042 461
- GB-A- 2 361 879
- US-A- 919 628
- US-A- 2 362 300
- US-A- 3 061 477
- US-A- 3 235 086
- US-A- 3 638 798

## Beschreibung

Die Erfindung betrifft eine Filtervorrichtung, z.B. eine Filtervorrichtung zur Verwendung bei der Herstellung pharmazeutischer Produkte.

In der pharmazeutischen Industrie umfasst der Herstellungsprozess von medizinischen Produkten, einschließlich chemisch basierten sowie biologisch basierten medizinischen Produkten, oftmals auch das Ausfiltern des in einer Suspension als Feststoff vorliegenden Produkts.

Aufgrund der hohen Anforderungen an die Produktqualität sowie an die Sauberkeit, Reinigbarkeit und Inspizierbarkeit der Filtervorrichtung(en), werden in der Pharmaindustrie in der Regel diskontinuierliche/batchweise Filterprozesse angewandt. Hierbei besteht jedoch der Nachteil einer verringerten Produktivität, die z.B. aus dem geringen Verhältnis zwischen produktiver Phase zu unproduktiver Phase resultiert.

Durch die Erfindung wird eine Filtervorrichtung geschaffen, mit welcher eine höhere Produktivität erreicht wird und welche im Hinblick auf z.B. die Produktqualität und z.B. die Sauberkeit, Reinigbarkeit und Inspizierbarkeit der Filtervorrichtung den in der Pharmaindustrie gestellten Anforderungen nachkommen kann, sodass sie für die Herstellung pharmazeutischer Produkte einsetzbar ist.

Gemäß einer Ausführungsform der Erfindung wird eine Filtervorrichtung zum Ausfiltern von Feststoff aus einem Feststoff-Flüssigkeit-Gemisch bereitgestellt, mit einem sich entlang einer Rotationsachse erstreckenden Lagerschaft, der ein freies Ende aufweist, einem am freien Ende des Lagerschafts abnehmbar angebrachten und mittels des Lagerschafts um die Rotationsachse rotierbar gelagerten und nur einseitig über eine Lagerung gelagerten, Rotationskörper, einer oder mehreren Filterzelle, welche jeweilig am Außenumfang des Rotationskörpers ausgebildet sind und aufweisen: ein am Außenumfang des Rotationskörpers angebrachtes Filtermittel zum Ausfiltern des Feststoffs aus dem Feststoff-Flüssigkeit-Gemisch unter Passieren-Lassen der Flüssigkeit des Feststoff-Flüssigkeit-Gemischs von einer Filtermitteleingangsseite zu einer Filtermittelausgangsseite und einen Verbindungskanal, der im Rotationskörper ausgebildet ist und sich von der Filtermittelausgangsseite zu einer Mündungsöffnung erstreckt, die an einer, z.B. dem Lagerschaft zugewandten, Axialseite (in Richtung der Rotationsachse gesehen) des Rotationskörpers im Radialabstand zu der Rotationsachse ausgebildet ist, einer Steuereinrichtung, welche eine (mechanische) Steuerbaueinheit aufweist zum gesteuerten Herstellen einer Verbindung zwischen der jeweiligen Mündungsöffnung und einer Mehrzahl von (Abzweig-) Leitungen, wobei die Steuerbaueinheit aufweist: eine mit dem Rotationskörper mitdrehbar ausgebildete Dichtscheibe, in welcher zu der jeweiligen Mündungsöffnung korrespondierend jeweils eine Durchgangsöffnung ausgebildet ist, und eine mit der Dichtscheibe im (fluiddichten) Rotationseingriff (fluiddichter Gleitrotationskontakt) stehende stationäre Steuerscheibe, in welcher mit einer jeweiligen (Abzweig-) Leitung verbundene Steueröffnungen ausgebildet sind, die in Abhängigkeit von der Rotationsposition des Rotationskörpers mit der jeweiligen Durchgangsöffnung der Dichtscheibe verbunden sind, um die Filtermittelausgangsseite der jeweiligen Filterzelle in Abhängigkeit von der Rotationsposition des Rotationskörpers mit der jeweiligen (Abzweig-)Leitung (in gesteuerter Weise, z.B. selektiv,) zu verbinden, und einem Gehäuse, z.B. einem abgedichteten bzw. fluiddichten Gehäuse, mit einem den Rotationskörper komplett aufnehmenden Gehäuseinnenraum, wobei die Steuerbaueinheit (komplett) im Gehäuse axial zwischen (axial und komplett zwischen) einer den (den Rotationskörper aufnehmenden) Gehäuseinnenraum (bezüglich der Rotationsachse) axial begrenzenden, quer zur Rotationsachse verlaufenden Gehäusewandung und dem Rotationskörper angeordnet ist. Der Rotationskörper ist in Form einer Zylindertrommel (z.B. Kreiszylindertrommel) oder in Form eines (Kreis-) Zylindertrommelsegments ausgebildet.

Die Abnehmbarkeit des Rotationskörpers vom Lagerschaft, z.B. in Verbindung mit der einseitigen Lagerung des Rotationskörpers, erlaubt eine einfache Zugänglichkeit zum Reinigen und Inspizieren bei einem Produktwechsel. Ferner ist damit auch die Steuerbaueinheit, welche zusammen mit dem Rotationskörper geschützt im gleichen Gehäuseinnenraum untergebracht ist, entsprechend schnell zugänglich, um z.B. inspiziert, gewartet oder im Falle, dass sie ausbaubar ist, ausgewechselt zu werden.

Die Steuereinrichtung kann z.B. als eine Drucksteuervorrichtung ausgebildet sein oder eine Drucksteuervorrichtung aufweisen, von welcher eine Druckdifferenz zwischen der Filtermittelausgangsseite und der Filtermitteleingangsseite der jeweiligen Filterzelle in Abhängigkeit von der Rotationsposition des Rotationskörpers (von der Filtermittelausgangsseite her) steuerbar bzw. einstellbar, z.B. variierbar. Hierzu kann z.B. mittels der Steuerbaueinheit eine mechanische Steuerung bzw. Einstellung der Druckdifferenz von der Filtermittelausgangsseite her ermöglicht werden, indem z.B. in der jeweiligen Leitung ein dieser jeweils zugeordneter Unterdruck/Überdruck vorliegt, z.B. permanent vorliegt. Hierdurch kann die Filterwirkung zum Erzielen eines gewünschten Filterergebnisses weiter einstellbar sein (wird unten noch weiter erläutert). (Es ist zu verstehen, dass - im Hinblick auf die genannte Druckdifferenz - mit sich am Filtermittel ablagerndem/anhaftendem Feststoff sich die Filtermitteleingangseite von einer Position unmittelbar an der Außenseite des Filtermittels zu einer Position an der Außenseite des am Filtermittel anhaftenden Feststoffs/Filterkuchens verschieben kann bzw. verschiebt.)

Über die diversen Leitungen kann in gesteuerter Weise im Verbindungskanal vorliegendes Fluid gesondert abgeführt werden. Damit können in Abhängigkeit von der Rotationsposition vorliegende unterschiedliche Fluide/Flüssigkeiten (wie z.B. aus dem Gemisch abgetrennte Flüssigkeit, Waschflüssigkeit, durch Trocknung des Filterkuchens entstehendes Feuchtgas/Feuchtluft) über diesen unterschiedlichen Fluiden jeweils zugeordnete, unterschiedliche Leitungen abgeführt werden (wird unten noch im weiteren Detail erläutert).

Die Steuerscheibe und die Dichtscheibe sind z.B. auseinanderbaubar vorgesehen; sodass z.B. die Steuerscheibe auswechselbar ist, um der jeweiligen Steuerscheibe zugeordnet jeweils andere Drucksteuerungen vorzusehen, um damit z.B. die Filterwirkung entsprechend einzustellen. Auch die Dichtscheibe kann auswechselbar vorgesehen sein.

Die Steuerbaueinheit ist z.B. zwischen der nur auf einer Seite des Rotationskörpers vorgesehenen bzw. angeordneten Lagerung und dem Rotationskörper angeordnet. Damit kann nach Ausbau des Rotationskörpers unmittelbar auf die Steuerbaueinheit zu deren Reinigung, Inspektion, etc. sowie ggf. zu deren Austausch zugegriffen werden. Der Lagerschaft ist z.B. über die Lagerung nur einseitig gelagert und weist ein freies Ende auf, an dem der Rotationskörper angebracht ist. Auf der vom Lagerschaft abgewandten Seite kann ein Hilfslager vorgesehen sein, von welchem der Rotationskörper zusätzlich abgestützt ist. Die Steuerbaueinheit befindet sind dann z.B. zwischen der auf Seiten des Lagerschafts angeordneten Lagerung und dem Rotationskörper. Das Hilfslager kann z.B. an einem Gehäusedeckel angeordnet sein, von dem eine von dem Lagerschaft abgewandte Gehäuseöffnung verschließbar ist, durch welche z.B. der Rotationskörper aus dem Gehäuse entnehmbar ist.

Die Steueröffnungen in der Steuerscheibe der (mechanischen) Steuerbaueinheit der Steuereinrichtung wirken wie Ventile, über welche die entsprechende Mehrzahl von (Abzweig-) Leitungen in Abhängigkeit von der Rotationsposition des Rotationskörpers mit dem (jeweiligen) Verbindungskanal im Rotationskörper in gesteuerter Weise, z.B. selektiv, verbindbar sind bzw. verbunden werden, wobei der (jeweilige) Verbindungskanal über die jeweilige (Abzweig-)Leitung mit einem dieser jeweils zugeordneten Überdruck oder Unterdruck beaufschlagbar ist. Die Steuereinrichtung (z.B. wenn als Drucksteuervorrichtung ausgebildet) kann zusätzlich zu der Steuerbaueinheit ein Druckregelventil (oder mehrere Druckregelventile) aufweisen, mittels dessen (deren) der Druck in der jeweiligen Leitung variierbar ist, z.B. in Abhängigkeit von der Rotationsposition des Rotationskörpers variierbar ist, und damit die Druckdifferenz zwischen der Filtermitteleingangsseite und der Filtermittelausgangsseite von der Filtermittelausgangsseite her ferner variierbar ist.

Aufgrund der Einstellbarkeit, oder z.B. der Variierbarkeit, der Druckdifferenz zwischen der Filtermitteleingangsseite und der Filtermittelausgangsseite, was über die (mechanische) Steuerbaueinheit der Steuereinrichtung erfolgen kann (indem z.B. in den Leitungen ein unterschiedlicher (Unter-) Druck vorliegt, z.B. permanent vorliegt), kann in Abhängigkeit von der Rotationsposition des Rotationskörpers in beliebig gesteuerter Weise Einfluss auf die Druckdifferenz zwischen der Filtermitteleingangsseite und der Filtermittelausgangsseite ausgeübt werden, um dadurch das Filterergebnis z.B. im Hinblick auf eine von der Pharmaindustrie geforderte Produktqualität hin weiter optimieren zu können. Das Steuern, z.B. Variieren, der Druckdifferenz von der Filtermittelausgangsseite her erlaubt eine gezielte Beaufschlagung der (jeweiligen) Filterzelle mit einem Unterdruck/Überdruck. Die Druckeinstellung bzw. Drucksteuerung kann auch derart sein, dass in jeder Leitung der gleiche (Unter-)Druck vorliegt, sodass die Druckdifferenz zwischen Filtermitteleingangsseite und Filtermittelausgangsseite im Betrieb im Wesentlichen immer gleich bleibt. Der jeweilige Kanalstrang, aus Verbindungskanal und (Abzweig-)Leitung und die jeweilige Filterzelle sind einfach zu reinigen und zu inspizieren.

Die Steuereinrichtung (z.B. wenn als Drucksteuervorrichtung ausgebildet) kann zusätzlich derart eingerichtet sein, dass von ihr auf der Filtermitteleingangsseite der Druck variierbar ist. Hierzu kann der Rotationskörper z.B. in einem abgedichteten Gehäuse (d.h. in einem abgedichteten Gehäuseinnenraum des Gehäuses) untergebracht sein, dessen Gehäuseinnenraum mittels einer Druckluft- und/oder Saugpumpe mit Überdruck bzw. Unterdruck beaufschlagbar ist.

Wie oben angesprochen erlaubt die Verwendung der Steuerbaueinheit mit den daran vorgesehenen Leitungen, die jeweiligen Steueröffnungen zugeordnet sind, die Abführung von unterschiedlichen Fluiden/Flüssigkeiten (z.B. durch den Filtervorgang abgetrennte Flüssigkeit aus dem Feststoff-Flüssigkeit-Gemisch, Waschflüssigkeit und/oder durch das Abtrocknen des an der Filterzelle anhafteten Feststoffs entstehendes Feuchtgas/Feuchtluft) durch die den Steueröffnungen entsprechend zugeordneten, unterschiedlichen (Abzweig-)Leitungen, die von der Steuerbaueinheit bzw. von deren Steuerscheibe ausgehenden. Über eine solche (Abzweig-) Leitung kann auch hoher Überdruck auf die Filtermittelausgangsseite der Filterzelle aufgebracht werden, um ein Lösen des Feststoffs vom Rotationskörper beim Feststoffaustrag zu erleichtern. Durch die kontinuierliche Drehbarkeit bzw. durch ein kontinuierliches Drehen des Rotationskörpers ist eine Produktivitätssteigerung erreichbar. Die ggf. vorgesehene einseitige bzw. fliegende Lagerung des Rotationskörpers reduziert Größe der Vorrichtung und Totraum für Schmutzansammlung, wobei der Rotationskörper dann leicht für Reinigungszwecke zugänglich ist.

Wie oben erläutert, kann in der jeweiligen (Abzweig-)Leitung z.B. ein der jeweiligen Leitung zugeordneter Überdruck/Unterdruck vorliegen, so dass der jeweilige Verbindungskanal, wenn die ihm zugeordnete Mündungsöffnung/Durchgangsöffnung, die der jeweiligen Leitung zugeordnete Steueröffnung überstreicht, mit dem in der Leitung (Abzweigleitung) vorliegenden, z.B. permanent vorliegenden, Überdruck/Unterdruck beaufschlagt wird. Ferner können der jeweiligen Leitung in Abhängigkeit von der Rotationsposition des Rotationskörpers unterschiedliche Funktionen (Gemisch-Flüssigkeitsabführung, Druckluftzufuhr, Feuchtgas-Abführung, Waschflüssigkeit-Abführung) zugeordnet werden.

Das Filtermittel kann auswechselbar oder nichtauswechselbar am Rotationskörper angebracht sein. Im Falle der Auswechselbarkeit kann beim Wechseln des zu filternden Produkts/Gemisches das Filtermittel ausgewechselt werden, wobei der Rotationskörper ggf. zu reinigen ist. Im Falle der Nicht-Auswechselbarkeit kann der Rotationskörper als Einmalfilter-Rotationskörper ausgebildet sein, der bei Wechsel auf ein anderes zu filterndes Produkt/Gemisch insgesamt ausgewechselt werden kann.

Das Filtermittel kann ein Filtertuch/Siebtuch sein, das (im Bereich der jeweiligen Filterzelle) auf den Außenumfang des Rotationskörpers aufgebracht, z.B. aufgespannt ist, oder es kann auch ein Hartkörpersieb aus z.B. Metall oder festerem Kunststoff sein. Das Filtermittel kann zum Beispiel von einer perforierten Stützplatte, z.B. einer Metall- oder Kunststoffstützplatte, gestützt sein. Das Filtermittel kann auswechselbar oder nicht-auswechselbar am Rotationskörper angebracht sein.

Bei der zylindrischen oder zylindersegmentförmigen Ausbildung des Rotationskörpers ist die (Längs-)Zylinderachse z.B. konzentrisch zur Rotationsachse angeordnet. Die Rotationachse verläuft im Wesentlichen horizontal, wobei auch eine zur Horizontalen in einem Winkel von kleiner als 90° schräg verlaufende Rotationsachse vorgesehen sein kann.

Nach einem Ausführungsbeispiel weist der Lagerschaft ein freies Ende auf, wobei der Rotationskörper am freien Ende des Lagerschafts angebracht sowie nur einseitig mittels einer Lagerung gelagert ist.

Der Rotationskörper kann z.B. drehfest am Lagerschaft angebracht sein, d.h. mit dem Lagerschaft mitdrehbar sein. Der Lagerschaft bildet damit eine Drehwelle. In diesem Falle befinden sich keine schmutzgenerierenden Drehlagerteile im Bereich des Rotationskörpers. Der Rotationskörper kann dann schmutzgeschützter in einem Gehäuse untergebracht werden, und die Lagerung kann außerhalb des den Rotationskörper aufnehmenden Gehäuses/Gehäuseabschnitts bzw. außerhalb jenes Gehäuseinnenraums angeordnet sein, in welchem der Rotationskörper untergebracht ist. Jedoch kann der Rotationskörper auch drehbar auf dem Lagerschaft gelagert sein. Der Lagerschaft bzw. die Drehwelle ist z.B. als Hohlschaft bzw. als Hohlwelle ausgebildet, wobei der sich durch den Hohlschaft/die Hohlwelle längs hindurch erstreckende Innenraum zur Aufnahme der (Abzweig-)Leitungen dienen kann.

Die Rotationsposition des Rotationskörpers kann z.B. zusätzlich mechanisch durch eine sich damit mitdrehende Steuerkurvenscheibe erfasst werden, welche Steuerkurvenscheibe z.B. Steuernocken aufweist, die mechanisch (z.B. über Stößel/Stangen) z.B. mit (zusätzlichen) Drucksteuervorrichtungen (wie z.B. in den (Abzweig-)Leitungen vorgesehene Öffnungs-/Schließventile zum (zusätzlichen) Öffnen bzw. Schließen der Leitungen) der Steuereinrichtung verbunden sind, oder die mechanisch mit z.B. Wascheinrichtungen (wie z.B. Waschdüsen) verbunden sind, um diese in Abhängigkeit von der Rotationsposition des Rotationskörpers gesteuert zu betätigen. Die Steuereinrichtung weist z.B. (zusätzlich) einen ein elektrisches Rotationspositionssignal erzeugenden Sensor auf (z.B. einen optischen Sensor (z.B. einen LED-Sensor) oder einen Magnetsensor oder einen kapazitiven Sensor) zum Erfassen der Rotationsposition des Rotationskörpers und eine mit dem Sensor und den z.B. wie vorstehend beschriebenen (zusätzlichen) Drucksteuervorrichtungen oder der Wascheinrichtung oder dergleichen Einrichtungen verbundene elektronische Steuereinheit auf, von welcher die Drucksteuereinrichtungen und/oder Wascheinrichtungen und/oder sonstige Einrichtungen in Abhängigkeit von der vom Sensor erfassten Rotationsposition des Rotationskörpers ansteuerbar sind. Im Falle der Verwendung eines solchen Sensors wird eine mögliche mechanische Signalrückführ-Verbindung zwischen den Drucksteuervorrichtungen oder dergleichen Einrichtungen und der Position des Rotationskörpers durch eine entsprechende Einrichtung/Programmierung der elektronischen Steuereinheit ersetzt. Die elektronische Steuereinheit kann in einfacher Weise ihrerseits variiert und damit in einfacher Weise an diverse Produkte/Produktionserfordernisse angepasst werden.

Das Gehäuse der Filtervorrichtung ist z.B. ein abgedichtetes (fluiddichtes) Gehäuse (d.h. ein Gehäuse mit einem abgedichteten Gehäuseinnenraum). Die Steuerbaueinheit ist im Gehäuse z.B. zwischen der (bzgl. des Rotationskörpers) auf Seiten des Lagerschafts bzw. der Lagerung angeordneten, quer zur Rotationsachse verlaufenden Gehäusewandung und dem Rotationskörper angeordnet. Die Gehäusewandung ist z.B. eine den Gehäuseinnenraum auf Seiten des Lagerschafts bzw. der (nur einseitig angeordneten) Lagerung definierende/begrenzende Gehäusewand und damit z.B. im Hinblick auf die Begrenzung des den Gehäusekörper aufnehmenden Gehäuseinnenraums eine stirnseitige Endwand des Gehäuses.

Die Dichtscheibe kann stofflich einstückig mit dem Rotationskörper ausgebildet sein. Die Dichtscheibe kann auch ein vom Rotationskörper separates Teil sein. Die Dichtscheibe ist z.B. stets am Rotationskörper fest angebracht (z.B. über den Lagerschaft), z.B. lösbar anmontiert. Die stationäre Steuerscheibe kann stofflich einstückig mit dem Gehäuse ausgebildet sein oder kann auch separat vom Gehäuse ausgebildet sein und z.B. als auswechselbares Bauteil ausgebildet sein.

Der Rotationskörper und die Dichtscheibe sind z.B. derart abnehmbar am Lagerschaft angebracht, dass beim Abnehmen des Rotationskörpers vom Lagerschaft die Dichtscheibe automatisch von der Steuerscheibe getrennt wird und zusammen mit dem Rotationskörper vom Lagerschaft abnehmbar ist.

Die jeweilige Filterzelle weist z.B. einen ersten und einen zweiten im Rotationskörper ausgebildeten Verbindungskanal auf, die sich jeweils von der Filtermittelausgangsseite zu einer ersten bzw. zu einer zweiten (von der ersten verschiedenen) Mündungsöffnung erstrecken, die an einer dem Lagerschaft bzw. der Lagerung zugewandten Axialseite des Rotationskörpers im Radialabstand zu der Rotationsachse ausgebildet sind, wobei sich die (jeweilige) erste und die (jeweilige) zweite Mündungsöffnung bezüglich der Rotationsachse derart in einem Radialabstand voneinander angeordnet sind, dass sie sich in Radialrichtung nicht überlappen. Im Falle mehrerer Filterzellen mit demgemäß mehreren ersten und mehreren zweiten Mündungsöffnungen befinden sich die ersten Mündungsöffnungen auf einem ersten zur Rotationsachse konzentrischen Umkreis und befinden sich die zweiten Mündungsöffnungen auf einem zweiten vom ersten Umkreis verschieden, zur Rotationsachse konzentrischen (=koaxialen) Umkreis.

Die Filtervorrichtung gemäß irgendeinem der vorausgehend beschriebenen Ausführungsbeispiele kann z.B. ferner aufweisen ein abgedichtetes Gehäuse (bei dem obigen Ausführungsbeispiel mit abgedichtetem Gehäuse hat Letzteres z.B. die nachfolgenden Zusatzeigenschaften), in welchem der Rotationskörper aufgenommen ist, wobei das Gehäuse auf einer vom Lagerschaft abgewandten Axialseite eine von einem abnehmbaren Gehäusedeckel verschlossene Gehäuseöffnung aufweist, durch welche hindurch der Rotationskörper in Axialrichtung der Rotationsachse aus dem Gehäuse entnehmbar ist.

Bei der Filtervorrichtung gemäß irgendeinem der vorausgehend beschriebenen Ausführungsbeispiele kann z.B. die jeweilige Filterzelle auf Seiten der Filtermittelausgangsseite eine im Rotationskörper, z.B. im Außenumfang des Rotationskörpers, ausgebildete Filtertasche aufweist, die sich in Richtung zu dem zugehörigen Verbindungskanal verjüngt.

Bei der Filtervorrichtung gemäß irgendeinem der vorausgehend beschriebenen Ausführungsbeispiele kann z.B. der Verbindungskanal der jeweiligen Filterzelle einen von der Filtermittelausgangsseite aus sich senkrecht zur Rotationsachse erstreckenden ersten Kanalabschnitt und einen sich vom ersten Kanalabschnitt zu der Mündungsöffnung hin sich parallel zur Rotationsachse erstreckenden zweiten Kanalabschnitt aufweisen, oder kann z.B. der Verbindungskanal der jeweiligen Filterzelle sich von der Filtermittelausgangsseite zu seiner Mündungsöffnung hin in einem Winkel zur Rotationsachse sowie zu deren Senkrechten erstrecken. Bei mehreren Verbindungskanälen im Rotationskörper kann die eine Art und/oder die andere Art von (wie z.B. vorstehend beschriebenen) Verbindungskanälen im selben Rotationskörper ausgebildet sein.

Bei der Filtervorrichtung gemäß irgendeinem/irgendeiner der vorausgehend beschriebenen Ausführungsbeispiele/Ausführungsformen kann z.B. der Lagerschaft als drehend angetriebene Drehwelle ausgebildet sein, mit welcher der Rotationskörper drehfest verbunden ist. D.h., der Lagerschaft und der Rotationskörper sind gemeinsam drehbar gelagert und rotieren miteinander um die Rotationsachse.

Bei der Filtervorrichtung gemäß irgendeinem/irgendeiner der vorausgehend beschriebenen Ausführungsbeispiele/Ausführungsformen kann ferner z.B. der Rotationskörper über eine Schnellverschluss-Steckkupplung (z.B. einen Bajonett-Verschluss oder eine Rast/SchnappVerbindung) oder über eine Schnellverschluss-Schraubkupplung (z.B. eine Milchrohrverschraubung) mit dem Ende des Lagerschafts gekuppelt sein.

Die Zufuhr des zu filternden Flüssigkeit-Feststoff-Gemisches erfolgt z.B. kontinuierlich über einen an einem bzw. dem Gehäuse, in welchem der Rotationskörper aufgenommen ist, ausgebildeten Gemisch-Zufuhranschluss.

Die Erfindung wird nachfolgend anhand von Ausführungsbeispielen mit Bezug auf die Zeichnungen im Detail erläutert.

In den Zeichnungen zeigen:
Figur 1 eine schematische, geschnittene Seitenansicht einer Filtervorrichtung gemäß einer Ausführungsform der Erfindung,
Figur 2 eine schematische, geschnittene Frontansicht der Filtervorrichtung von Figur 1,
Figur 3 eine teilweise aufgeschnittene Frontansicht eines Rotationskörpers gemäß einem anderen Ausführungsbeispiel der Filtervorrichtung von Figuren 1 und 2,
Figur 4 eine abgebrochene, geschnittene Seitenansicht des Rotationskörpers von Figur 3, zeigend die Verbindung des Rotationkörpers mit einem Lagerschaft,
Figur 5 eine abgebrochene, geschnittene Frontansicht entlang der in Figur 4 mit a-a bezeichneten Linie, zeigend eine Frontansicht einer Steuerscheibe einer Steuerbaueinheit der Filtervorrichtung von Figuren 1 und 2,
Figur 6 eine abgebrochene, geschnittene Seitenansicht einer Steuerbaueinheit gemäß einem anderen Ausführungsbeispiel der Filtervorrichtung von Figuren 1 bis 5,
Figur 7 eine abgebrochene, geschnittene Seitenansicht einer Steuerbaueinheit gemäß einem noch anderen Ausführungsbeispiel der Filtervorrichtung von Figuren 1 bis 5,
Figuren 8a und 8b eine schematische, geschnittene Seitenansicht bzw. eine schematische Frontansicht eines Rotationskörpers gemäß einem anderen Ausführungsbeispiel der Filtervorrichtung von Figuren 1 und 2,
Figur 9 eine schematische, geschnittene Seitenansicht eines Rotationskörpers gemäß einem noch anderen Ausführungsbeispiel der Filtervorrichtung von Figuren 1 und 2,
Figur 10 eine schematische, geschnittene Seitenansicht eines Rotationskörpers gemäß einem noch anderen Ausführungsbeispiel der Filtervorrichtung von Figuren 1 und 2,
Figur 11 eine schematische, geschnittene Seitenansicht eines Rotationskörpers gemäß einem noch anderen Ausführungsbeispiel der Filtervorrichtung von Figuren 1 und 2.

In den Figuren werden für gleiche oder ähnliche Bauteile die gleichen Bezugszeichen verwendet.

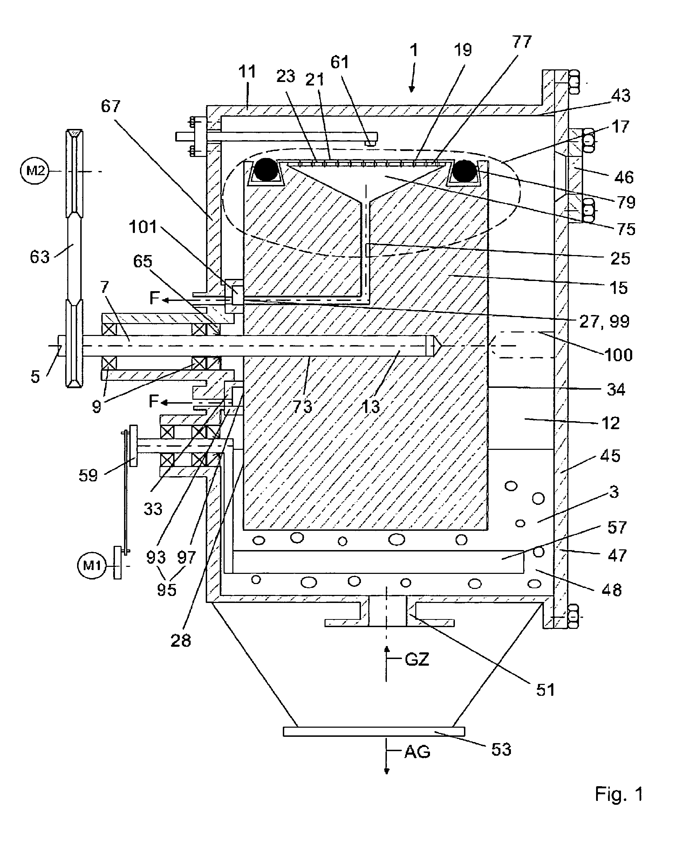

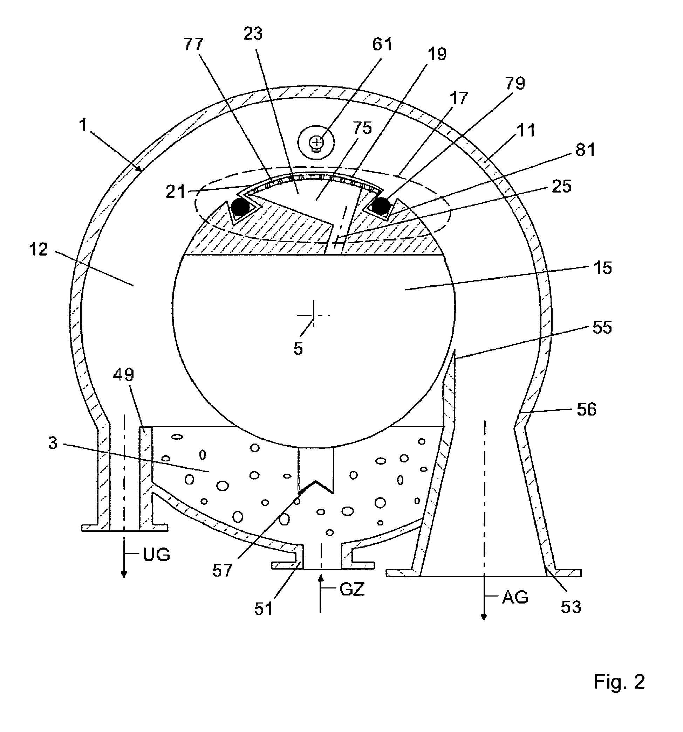

Die in den Figuren 1 und 2 dargestellte Filtervorrichtung 1 zum Ausfiltern von Feststoff aus einem Feststoff-Flüssigkeit-Gemisch 3 gemäß einer ersten exemplarischen Ausführungsform der Erfindung weist auf einen sich entlang einer Rotationsachse 5 erstreckenden Lagerschaft 7 in Form einer von einer Rollen-Lagerung 9 (auch eine Gleitlagerung kann verwendet werden) in einem Gehäuse 11 drehbar gelagerten Hohlwelle, der ein freies Ende 13 aufweist, einen am freien Ende 13 des Lagerschafts 7 lösbar und drehfest angebrachten und somit mit dem Lagerschaft 7 um die Rotationsachse 5 mitdrehbaren sowie nur einseitig (fliegend) gelagerten Rotationskörper 15 (d.h., der Lagerschaft 7 ist entlang der Rotationsachse 5 gesehen nur auf einer Axialseite des Rotationskörpers 15 im Gehäuse 11 abgestützt bzw. gelagert), eine einzelne Filterzelle 17, die am Rotationskörper 15 ausgebildet ist und die aufweist ein am Außenumfang des Rotationskörpers 15 angebrachtes Filtermittel 19 (z.B. in Form eines Filtertuchs) zum Ausfiltern des Feststoffs aus dem Feststoff-Flüssigkeit-Gemisch 3 unter Passieren-Lassen der Flüssigkeit des Feststoff-Flüssigkeit-Gemischs 3 von einer Filtermitteleingangsseite 21 zu einer Filtermittelausgangsseite 23 und einen Verbindungskanal 25, der im Rotationskörper 15 ausgebildet ist und sich von der Filtermittelausgangsseite 23 aus erstreckt und in einer Mündungsöffnung 27 ausmündet, die an einer dem Lagerschaft 7 zugewandten Axialseite 28 des Rotationskörpers 15 in einem Radialabstand zur Rotationsachse 5 sowie in diesem Falle zum Lagerschaft 7 ausgebildet ist, und eine Steuereinrichtung 33, von welcher eine Mehrzahl von Leitungen F in Abhängigkeit von der Rotationsposition des Rotationskörpers 15 in gesteuerter Weise, z.B. selektiv, mit dem (jeweiligen) Verbindungskanal 25 verbindbar ist bzw. verbunden wird (wird unten noch weiter im Detail erläutert), wobei die Steuereinrichtung 33 auch als Drucksteuervorrichtung eingerichtet sein kann, um eine Druckdifferenz zwischen der Filtermittelausgangsseite 23 und der Filtermitteleingangsseite 21 in Abhängigkeit von der Rotationsposition des Rotationskörpers 15 von der Filtermittelausgangsseite 23 her zu steuern bzw. einzustellen, z.B. zu variieren.

Der Rotationskörper 15 hat eine zylindertrommelförmige, z.B. eine kreiszylindertrommelförmige, Gestalt, wobei die Zylinderachse konzentrisch zur Rotationsachse 5 verlaufend angeordnet ist.

Das Gehäuse 11 nimmt den Rotationskörper 15 komplett auf (d.h., der Rotationskörper ist vom Gehäuse 11 vollständig umschlossen und damit in dessen Gehäuseinnenraum 12 aufgenommen, z.B. abgedichtet bzw. fluiddicht aufgenommen) und hat z.B. eine zu der Außenumlaufbahn des Rotationskörpers 15 konforme Zylindertrommelgestalt und weist in Richtung der Rotationsachse 5 gesehen auf der von dem Lagerschaft 7 bzw. von der Lagerung 9 abgewandten Axialseite 34 des Rotationskörpers 15 eine Öffnung 43 sowie einen die Öffnung 43 (fluid)dicht verschließenden, abnehmbaren Gehäusedeckel 45 auf. Die Öffnung 43 erstreckt sich mit ihrer Öffnungsfläche in etwa senkrecht zur Rotationsachse 5, wobei sie z.B. in etwa konzentrisch zur Rotationsachse 5 ausgebildet ist. Die Öffnung 43 ist in Richtung der Rotationsachse 5 fluchtend zum Rotationskörper 15 angeordnet und hat eine derartige Weite, dass der Rotationskörper 15 axial in Richtung bzw. entlang der Rotationsachse 5 durch die Öffnung 43 hindurch aus dem Gehäuse 11 entnehmbar ist, wenn der Gehäusedeckel 45 abgenommen ist. Im Gehäusedeckel 45 ist ferner ein Sicht-/Inspizier-Fenster 46 ausgebildet, welches mit einer optischen Sichtvergrößerungslinse ausgestattet sein kann.

Der untere Gehäuseabschnitt 47 des Gehäuses 11 bildet bzw. stellt (integral mit dem Gehäuse 11 ausgebildet) eine Wanne zur Aufnahme des Feststoff-Flüssigkeit-Gemisches 3 aus/dar. Der untere Gehäuseabschnitt 47 definiert einen Aufnahmeraum 48 zur Aufnahme des Feststoff-Flüssigkeits-Gemisches 3, wobei der Aufnahmeraum 48 und der den Rotationskörper 15 aufnehmende Gehäuseinnenraum 12 eine von der gleichen Gehäusewand begrenzte integrale Raumeinheit bilden.

Der Füllstand/Pegel des Feststoff-Flüssigkeit-Gemisches 3 ist durch einen Überlauf/Überlaufstutzen 49 auf ein Maximum begrenzt. Überschüssiges Gemisch 3 läuft in Richtung des Pfeils UG ab und wird z.B. über einen nicht dargestellten Pumpkreislauf durch einen Gemisch-Zuführanschluss 51 wieder dem unteren Gehäuseabschnitt 47 zugeführt (z.B. in kontinuierlicher Weise). Der Überlauf 49 kann mit einem auswechselbaren Adapterstück versehen sein (z.B. einem Adapterrohrstück), wobei Adapterstücke unterschiedlicher Rohrlänge selektiv einsetzbar sind, um den Füllstand entsprechend der Adapterrohrstücklänge einzustellen. Der Pegel des Gemisches 3 wird in jedem Falle so eingestellt, dass die Außenumlaufbahn des Rotationskörpers 15 durch das Gemisch 3 hindurch verläuft, um damit die Filterzelle 17 im Rahmen der Rotation des Rotationskörpers 15 in durch die Rotationsgeschwindigkeit und den Außenumfang bestimmten Zeitintervallen und damit quasikontinuierlich durch das Feststoff-Flüssigkeit-Gemisch 15 hindurchführen zu können bzw. hindurchzuführen.

Am unteren Gehäuseabschnitt 47 ist der Gemisch- oder Suspensions-Zuführanschluss 51 (z.B. in Form eines Anschlussstutzens oder Anschlussflanschs) ausgebildet, über welchen zu filterndes Feststoff-Flüssigkeits-Gemisch dem Gehäuse 11 kontinuierlich zuführbar ist bzw. kontinuierlich zugeführt wird (Pfeil GZ (Gemisch-Zufuhr)). Im vorliegenden Ausführungsbeispiel erstreckt sich der Suspensions-Zuführanschluss 51 von einem Außenumfang aus radial, diametrisch nach innen in Richtung zu der Rotationsachse 5.

Am Außenumfang des Gehäuses 11 ist ferner eine Feststoff-Austragöffnung 53 ausgebildet, die in eine Richtung tangential zur Außenumlaufbahn des Rotationskörpers 15 weist und durch welche aus dem Feststoff-Flüssigkeit-Gemisch 3 ausgefilterter Feststoff aus der Filtervorrichtung 1 abführbar bzw. austragbar ist (Pfeil AG (Feststoff-Austrag)). Stromaufwärts der Austragöffnung 53 ist ein Schaber 55 am Gehäuse 11 angeordnet, welcher, z.B. mittels einer Schabekante, in kleinem Abstand zum Außenumfang bzw. zur Außenumlaufbahn des Rotationskörpers 15 angeordnet ist, um den Feststoff, der als Filterkuchen auf dem Rotationskörper 15 bzw. auf dessen Außenumfang anhaftet, vom Rotationskörper 15 abzuschaben bzw. abzustreifen, so dass der Feststoff in einen der AustragÖffnung 53 vorgeschalteten, im Gehäuse 11 ausgebildeten Austragschacht oder Austragkanal 56 fällt.

Die Filtervorrichtung 1 ist ferner mit einer Gemisch- oder Suspensions-Rührvorrichtung mit einem automatisch hin und her bewegbaren Rührarm 57 ausgestattet, welcher in dieser Ausführform von einem via Elektromotor M1 angetriebenen Kurbeltrieb 59 angetrieben ist.

Die Filtervorrichtung 1 weist ferner eine Waschvorrichtung mit einer oder mehreren Waschdüsen 61 auf, welche benachbart zur Außenumlaufbahn des Rotationskörpers 15 angeordnet ist/sind und ansteuerbar ist/sind, um in gesteuerter Weise, z.B. selektiv, auf den im Bereich der Filterzelle 17 am Außenumfang des Rotationskörpers 15 anhaftenden Feststoff (Feststoff-Filterkuchen) eine Waschflüssigkeit sprühen zu können. Die Waschdüse/n 61 ist/sind mit einer nicht dargestellten elektronischen Steuereinheit verbunden, welche die Waschdüsen in Abhängigkeit von der von z.B. einem Rotationspositionsdetektor detektierten Rotationsposition des Rotationskörpers 15 ansteuern/betätigen. Um zu verhindern, dass Waschflüssigkeit in das Gemisch gelangt, können benachbart zu den Wachdüsen 61 und benachbart zur Außenumlaufbahn des Rotorkörpers 15 (nicht dargestellte) Auffangwannen angeordnet sein, über welche Waschflüssigkeit, die den außen am Filtermittel 19 anhaftenden Feststoff (-Filterkuchen) nicht erreicht oder davon wegspritzt, aufgefangen und über entsprechende Leitungen abführbar ist.

Der als Drehwelle ausgebildete Lagerschaft 7 wird mittels eines via Elektromotor M2 angetriebenen Getriebes 63 (hier in Form eines Riemengetriebes) drehend angetrieben. Anstelle des Riementriebs kann jegliche andere Art von Getriebe, wie Zahnradgetriebe, Kettengetriebe, Reibradgetriebe etc., vorgesehen sein. Der Lagerschaft 7 ist mittels einer Wellendichtung 65 (z.B. einem Simmerring) gegen eine Gehäusewandung 67 hin abgedichtet, welche den den Rotationskörper 15 aufnehmenden Gehäuseinnenraum 12 auf Seiten des Lagerschafts 7 bzw. der Lagerung 9 axial definiert/begrenzt.

Der Rotationskörper 15 ist abnehmbar am Lagerschaft 7 ausgebildet, wobei die Kupplung zwischen dem Rotationskörper 15 und dem Lagerschaft 7 an dem der Gehäuseöffnung 43 zugewandten freien Ende (oder freien Endabschnitt) 13 z.B. über eine Schnellverschluss-Kupplung 73, wie z.B. einen Bajonett-Verschluss, eine Milchrohrkupplung, eine Raststeckverbindung, etc., erfolgt.

Die einzelne bzw. einzige am Rotationskörper 15 vorgesehene Filterzelle 17 weist auf der Filtermittelausgangsseite 23 eine in dem Außenumfang des Rotationskörpers 15 ausgebildete Filtertasche 75 auf, welche in Betriebsdrehrichtung (Pfeil BD) des Rotationskörpers 15 in dessen Umfangsrichtung mit zunehmender radialer Taschentiefe ausgebildet ist, wobei an der tiefsten Taschenstelle der Filtertasche 75, der Verbindungskanal 25 aus der Filtertasche 75 ausmündet. Im Querschnitt parallel zur Rotationsachse 5 hat die Filtertasche 75 eine sich in Richtung zu dem Verbindungskanal 25 hin verjüngende Trichterform. Auf der Filtertasche 75 ist eine deren Radialöffnung abdeckende, perforierte Stützplatte 77 (Filtermittelabstützung) angeordnet, entlang deren radialer Außenseite sich das Filtermittel 19 erstreckt. In dieser Ausführungsform ist das Filtermittel 19 ein auswechselbares, flexibles Sieb, z.B. eine Siebtuch, welches sich über die Filtertasche 75 erstreckt und mittels einer sich um die Filtertasche 75 bzw. um deren radiale Eintrittsöffnung herum erstreckenden Halteschnur 79, z.B. einer elastischen Halteschnur 79, am Rotationskörper 15 gehalten ist. Die Halteschnur 79 greift in eine im Außenumfang des Rotationskörpers 15 ausgebildete und sich um die Filtertasche 75 herum erstreckenden Aussparung/Nut 81 ein. Die Filterzelle 17 erstreckt sich am Außenumfang des Rotationskörpers 15 in Richtung der Rotationachse 5 gesehen in etwa über den größten Teil der Breite/Höhe des Rotationskörpers 15/der Zylindergestalt des Rotationskörpers 15.

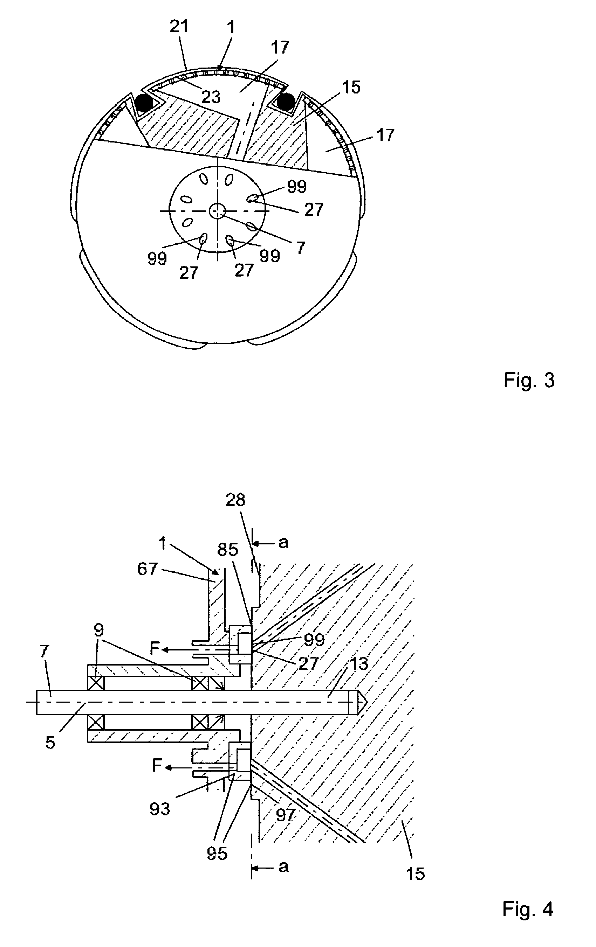

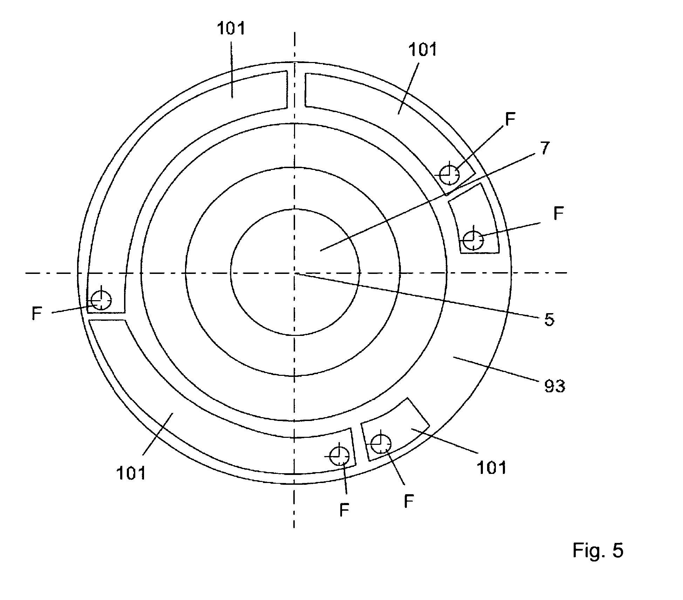

Die Steuereinrichtung 33 weist eine mechanische Steuerbaueinheit 95 mit einer Steuerscheibe 93 (siehe auch Figur 5) und einer Dichtscheibe 97 auf. Die Steuerscheibe 93 ist in dieser Ausführungsform ein vom Gehäuse separates Bauteil und ist am Gehäuse 11, in welchem der Rotationskörper 15 aufgenommen ist, drehfest und damit stationär angebracht. Die Steuerscheibe 93 ist an jener Seite der auf Seiten der Lagerung 9 angeordneten Gehäusewandung 67 angeordnet, die jener Axialseite 28 des Rotationskörpers 15 zugewandt ist, die der Lagerung 9 zugewandt ist. Die Steuerscheibe 93 ist in einer Ringform ausgebildet und erstreckt sich konzentrisch um die Rotationsachse 5. Die ringförmige Steuerscheibe 93 ist in dieser Ausführungsform auf einem ringförmigen Gehäusevorsprung angeordnet, der den Lagerschaft 7 konzentrisch umgibt und in Richtung zum Rotationskörper 15 hin von der Gehäusewandung 67 aus axial vorsteht (siehe auch Ausführungsbeispiel von Fig. 4).

Die Dichtscheibe 97 ist stofflich einstückig/integral mit dem Rotationskörper 15 ausgebildet und weist Durchgangsöffnungen 99 auf, die aufgrund der integralen Ausbildung der Dichtscheibe 97 und des Rotationskörpers 15 identisch mit den Mündungsöffnungen 27 der Verbindungskanäle 25 ausgebildet sind (die Mündungsöffnungen 27 und die Durchgangsöffnungen 99 überlappen sich damit integral konform zueinander).

Die Dichtscheibe 97 und die Steuerscheibe 93 sind an einander zugewandten, axialen Scheibenflächen miteinander in einem axialen (bzgl. der Rotationsachse 5), fluiddichten Rotationseingriff/Gleitkontakt, sodass Fluid/Flüssigkeit über die jeweilige Mündungsöffnung/Durchgangsöffnung 27, 99 zwischen dem jeweils (zur jeweiligen Mündungsöffnung/Durchgangsöffnung 27, 99) zugeordneten Verbindungskanal 25 und der Steuerscheibe 93 transferierbar ist.

In der der Dichtscheibe 97 zugewandten Axialfläche der Steuerscheibe 93 sind konzentrisch zur Rotationsachse 5 sich erstreckende, voneinander separate Steueröffnungen 101 (siehe Figur 5) ausgebildet, die mit einer jeweils zugeordneten (Abzweig-)Leitung F in Verbindung sind. Der Radialabstand der Steueröffnungen 101 (und in dieser Variante auch der (Abzweig-)Leitungen F) zur Rotationsachse 5 entspricht in etwa dem Radialabstand der Mündungsöffnungen/Durchgangsöffnungen 27, 99 (bzw. bei der Ausführungsform von Figuren 1 und 2 der einzelnen Mündungsöffnung/Durchgangsöffnung 27, 99) zur Rotationsachse 5, sodass bei der Relativdrehung der Dichtscheibe 97 relativ zur Steuerscheibe 93 die jeweilige Durchgangsöffnung/Mündungsöffnung 27, 99 sukzessive in wiederholte Überlappung mit den Steueröffnungen 101 kommt. Es kann auch pro Steueröffnung 101 mehr als eine Leitung F angeordnet sein bzw. damit in Verbindung sein

Über die unterschiedlichen Steueröffnungen 101 und die jeweilige daran angeschlossene (Abzweig-)Leitung F kann z.B. im Verbindungskanal 25 vorliegendes Fluid in gesteuerter Weise in Abhängigkeit von der Rotationsposition des Rotationskörpers 15 gesondert abgeführt werden und z.B. auch der jeweilige Verbindungskanal 25 mit einem anderen Überdruck/Unterdruck beaufschlagt werden (z.B. indem in der jeweiligen Leitung ein jeweils vorbestimmter Übderdruck/Unterdruck vorliegt, z.B. permanent vorliegt), um dementsprechend ggf. Gemisch-Flüssigkeit über eine (oder mehrere) dieser Gemisch-Flüssigkeit zugeordneten Abzweigleitungen F abzusaugen, Feuchtluft zum Trocknen des an der Filterzelle 17 anhaftenden Feststoffs über eine andere, dieser Feuchtluft zugeordnete Abzweigleitung F abzusaugen, Waschflüssigkeit abzusaugen (über wiederum eine andere der Abzweigleitungen F), und ggf. Druckluft zuzuführen. In der jeweiligen Abzweigleitung F kann demgemäß stets ein vorbestimmter Überdruck/Unterdruck vorliegen, der mit dem Überstreichen der jeweils zugehörigen Steueröffnung 101 durch die Durchgangsöffnung 99/Mündungsöffnung 27 auf den daran angeschlossenen Verbindungskanal 25 sofort aufgebracht wird. Die Drucksteuerung kann auch derart gewählt sein, dass in jenen (Abzweig-)Leitungen F, die zum Abführen eines Fluid (wie z.B. abgetrennte Flüssigkeit aus dem Gemisch, Waschflüssigkeit, oder Feuchtgas/Feuchtluft) vorgesehen sind, oder in allen (Abzweig-)Leitungen F der gleiche (Unter-)Druck vorliegt.

In der Ausführungsform von Figuren 1 und 2 wird die Dichtscheibe 97 beim Abnehmen des Rotationskörpers 15 vom freien Ende/Endabschnitt 13 des Lagerschafts 7 aufgrund ihrer integralen Bauweise mit dem Rotationskörper 15 automatisch von der am Gehäuse 11 fest angebrachten Steuerscheibe 93 getrennt, sodass sofortiger Zugriff auf die Steuerscheibe 93 zur Reinigung und/oder Inspektion und/oder ggf. zum Auswechseln der Steuerscheibe 93 (falls ausbaubar) möglich ist.

Die von der Steuerscheibe 93 ausgehend abgezweigten (Abzweig)-Leitungen F sind in einer Richtung in etwa parallel zur Rotationsachse 5 durch das Gehäuse 11 bzw. die quer zur Rotationsachse 5 verlaufende Gehäusewandung 67 in Richtung weg vom Rotationskörper 15 verlaufend ausgebildet, wobei sich die (Abzweig)-Leitungen F in einem Radialabstand vom Lagerschaft 7 sowie auch in einem Radialabstand zur Lagerung 9 radial außerhalb davon erstrecken.

Wie oben erläutert kann über die diversen (Abzweig-)Leitungen F der Verbindungskanal 25 gesteuert mit z.B. unterschiedlichen Drücken/Unterdrücken (die z.B. permanent in der jeweiligen Abzweigleitung mit einer bestimmten Größe vorliegen) beaufschlagt werden, um dadurch eine Druckdifferenz zwischen der Filtermitteleingangsseite 21 und der Filtermittelausgangsseite 23 gezielt gesteuert herzustellen.

In der jeweiligen (Abzweig-)Leitung F liegt zum Beispiel stets ein (z.B. gegenüber der Filtermitteleingangsseite 21) vorbestimmter Unterdruck oder Überdruck vor, so dass bei Herstellen einer Verbindung zwischen der jeweiligen (Abzweig-) Leitung F und dem Verbindungskanal 25 der zugehörige Überdruck oder Unterdruck relativ schnell auf die Filtermittelausgangsseite 23 aufgebracht ist. In jenen (Abzweig-)Leitungen F, die zum Abführen von Fluid aus dem Verbindungskanal 25 vorgesehen sind, kann auch stets der gleiche Unterdruck vorliegen.

Zusätzlich zu der mechanischen Steuerbaueinheit 95 kann die Steuereinrichtung 33 auch in der jeweiligen (Abzweig-) Leitung F ein Druckregelventil zum kontinuierlichen oder diskreten Einstellen des Drucks/Unterdrucks (z.B. in Abhängigkeit von der Rotationsposition des Rotationskörpers) aufweisen.

Die Steuereinrichtung 33 kann ferner auch eine Gehäuseinnenraum-Drucksteuervorrichtung aufweisen, mittels welcher der den Rotationskörper 15 aufnehmende Gehäuseinnenraum 12 des Gehäuses 11 gesteuert mit Überdruck bzw. Unterdruck beaufschlagbar ist, um dadurch die Druckdifferenz zwischen Filtermitteleingangsseite 21 und Filtermittelausgangsseite 23 auch von der Filtermitteleingangseite 21 her einstellen zu können.

Der Betrieb der Filtervorrichtung 1 ist z.B. wie folgt. Der zylindertrommelförmige Rotationskörper 15 wird in der Betriebsdrehrichtung (Pfeil BD) mit dem drehend angetriebenen Lagerschaft 7 mitgedreht, wodurch die Filterzelle 1 in regelmäßige (oder bei sich ändernder Drehzahl in entsprechend unregelmäßigen) Zeitintervallen und damit quasikontinuierlich das im unteren Gehäuseabschnitt 47 aufgenommene Feststoff-Flüssigkeit-Gemisch 3 durchläuft, welches über den Suspension-/Gemisch-Zuführanschluss 51 z.B. kontinuierlich mit zu filterndem Feststoff-Flüssigkeit-Gemisch 3 versorgt wird.

In einem Betriebszustand, in welchem die Filterzelle 17 in das Gemisch 3 eintaucht, ist z.B. die in Figur 5 rechts unten gezeigte, kleine Steueröffnung 101 mit dem Verbindungskanal 25 in Fluidverbindung, um z.B. einen Überdruck auszugeben, um das Filtermittel 19 im Gemisch 3 nochmals kurz auszublasen (z.B. unter Blasenbildung im Gemisch 3). Bei weiterer Rotation des Rotationskörpers 15, wobei die Filterzelle 17 sich noch im Gemisch 3 befindet, kommt der Verbindungskanal mit der in Fig. 5 links unten gezeigten Steueröffnung 101 in Fluidverbindung, über welche ein Unterdruck zum Ansaugen von Gemisch 3 an die Filtermittelausgangsseite 23 angelegt wird (Filterbetrieb). Die in Fig. 5 links oben gezeigte Steueröffnung 101 kann z.B. dem Absaugen von Waschflüssigkeit dienen (wenn die Filterzelle 17 sich im Bereich der Waschdüse 61 befindet), und die in Figur 5 rechts oben gezeigte, größere Steueröffnung 101 kann dem Absaugen von Feuchtgas/Feuchtluft beim Trocknen des außen am Filtermittel 19 anhaftenden Feststoff-Filterkuchens dienen (wenn die Filterzelle 17 sich im Bereich zwischen der Waschdüse 61 und dem Schaber 55 befindet). Ferner kann z.B. über die dann nachfolgende, in Figur 5 rechts oben gezeigte, kleinere Steueröffnung 101 ein kurzer Überdruckimpuls zum Absprengen des Filterkuchens vom Rotationskörper 15 aufgebracht werden.

Mittels der eine oder der mehrere Steueröffnungen 101 aufweisenden Steuerscheibe 93 der Steuerbaueinheit 95 der Steuereinrichtung 33 kann daher in Abhängigkeit von der Rotationsposition des Rotationskörpers 15 in beliebig gesteuerter Weise Fluid vom Verbindungskanal 25 abgeführt werden und z.B. Einfluss auf die Druckdifferenz zwischen der Filtermitteleingangsseite 21 und der Filtermittelausgangsseite 23 von der Filtermittelausgangsseite 23 her ausgeübt werden, um dadurch das Filterergebnis z.B. im Hinblick auf eine von der Pharmaindustrie geforderte Produktqualität hin optimieren zu können. Durch die kontinuierliche Drehung des Rotationskörpers 15 wird eine Produktivitätssteigerung erreicht. Die ggf. einseitige bzw. fliegende Lagerung des Rotationskörpers reduziert Größe der Vorrichtung und Totraum für Schmutzansammlung. Außerdem ist der Rotationskörper leicht für Reinigungszwecke zugänglich und ggf. auch ausbaubar. Die Abführung der Flüssigkeit im Bereich z.B. benachbart um die Rotationsachse 5 bzw. um den Lagerschaft 7 resultiert in kurzen Abführwegen, wodurch Raum für Schmutzansammlungen weiter reduziert ist.

In der Figur 3 ist eine teilweise aufgeschnittene Frontansicht eines Rotationskörpers 15 gemäß einem weiteren Ausführungsbeispiel der Filtervorrichtung 1 von Figuren 1 und 2 dargestellt. In der Figur 4 ist eine abgebrochene, geschnittene Seitenansicht des Rotationskörpers 15 von Figur 3 dargestellt, zeigend die Anschlussstelle 85 des Rotationkörpers 15 mit dem Lagerschaft 7. In der Figur 5 ist eine abgebrochene, geschnittene Frontansicht entlang der in Figur 4 mit a-a bezeichneten Linie dargestellt, zeigend eine Frontansicht der Steuerscheibe 93 der Steuerbaueinheit 95 (aufweisend die Steuerscheibe 93 und die Dichtscheibe 97) der Steuereinrichtung 33 der Filtervorrichtung 1 von Figuren 1 bis 4.

Im Unterschied zum Rotationskörper 15 gemäß der Ausführungsform von Figuren 1 und 2 weist der Rotationskörper von Figuren 3 und 4 nicht nur eine einzelne Filterzelle 15 auf, sondern der Rotationskörper 15 der Filtervorrichtung 1 gemäß dem Ausführungsbeispiel von Figur 3 ist als zylindertrommelförmiger Mehrfachfilterzellen-Rotationskörper ausgebildet, in dessen Außenumfang eine Mehrzahl von Filterzellen 17 ausgebildet ist, welche jeweils gemäß der Einzelfilterzelle 17 der Ausführungsformen von Figuren 1 und 2 ausgebildet sein können bzw. sind und welche in Umfangsrichtung des Rotationskörpers 15 aufeinanderfolgend angeordnet sind. Die Mündungsöffnungen 27, die mit den Durchgangsöffnungen 99 der Dichtscheibe 97 identisch ausgebildet sind und an welchen die sich von der Filtermittelausgangsseite 23 aus erstreckenden Verbindungskanäle 25 der Filterzellen 17 ausmünden, befinden sich an jener Axialseite 28 des Rotationskörpers 15 (bzgl. der Längsrichtung der Rotationsachse 5), auf welcher die nur einseitig vorgesehene Lagerung 9 angeordnet ist. Die Mündungsöffnungen 27 sind bzgl. der Rotationsachse 5 in einem Radialabstand zu der Rotationsachse 5 und zum Lagerschaft 7, konzentrisch zur Rotationsachse 5 um die Rotationsachse 5/den Lagerschaft 7 herum angeordnet. Die jeweilige Mündungsöffnung 27 ist ferner in Radialrichtung länglich ausgebildet, sodass in Umfangsrichtung des Rotationskörpers gesehen mehr Mündungsöffnungen mit einer vorbestimmten Mündungsquerschnittfläche angeordnet werden können.

Die Steuerscheibe 93 ist wie anhand von Figuren 1 und 2 erläutert ausgebildet und ist auf einem von der Gehäusewandung 67 sich in Richtung zum Rotationskörper 15 hin erstreckenden Vorsprung angeordnet. Die gesamte Steuerbaueinheit 95 befindet sich zwischen der Gehäusewandung 67 und dem Rotationskörper 15. Die Gehäusewandung 67 befindet sich bei diesem Ausführungsbeispiel in Richtung der Rotationsachse 5 gesehen auf Höhe der Lagerung 9, und zwar zwischen einem Paar von Ringlagern der Lagerung 9.

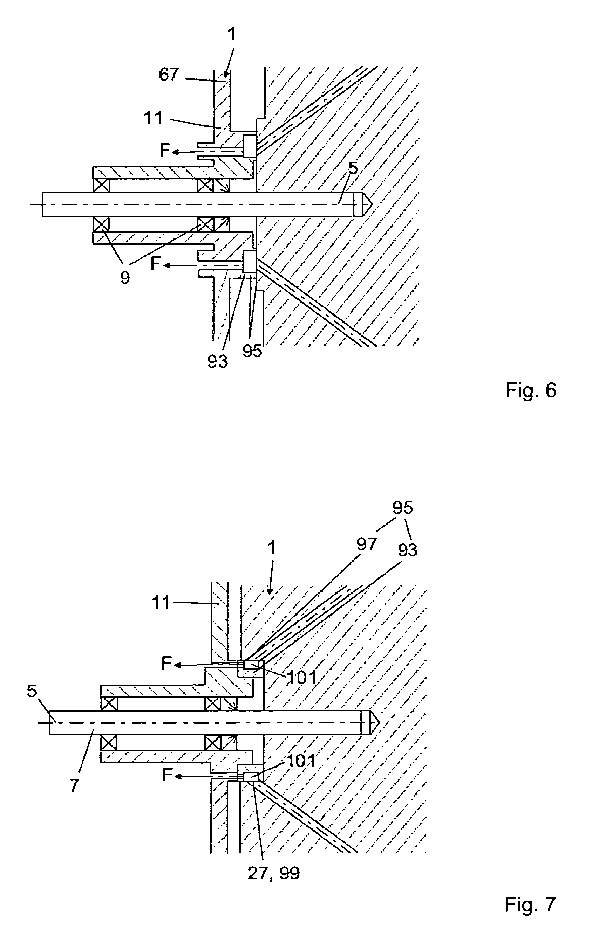

Figur 6 zeigt eine abgebrochene, geschnittene Seitenansicht einer Steuerbaueinheit 95 gemäß einem anderen Ausführungsbeispiel der Filtervorrichtung 1 von Figuren 1 bis 5, wobei der Unterschied zu der in den Figuren 1 und 2 gezeigten Ausführungsform darin liegt, dass die Steuerscheibe 93 stofflich einstückig mit dem Gehäuse 11 verbunden ist und die Gehäusewandung 67 auf Höhe (in Richtung der Rotationsachse 5) der Lagerung 9 liegt.

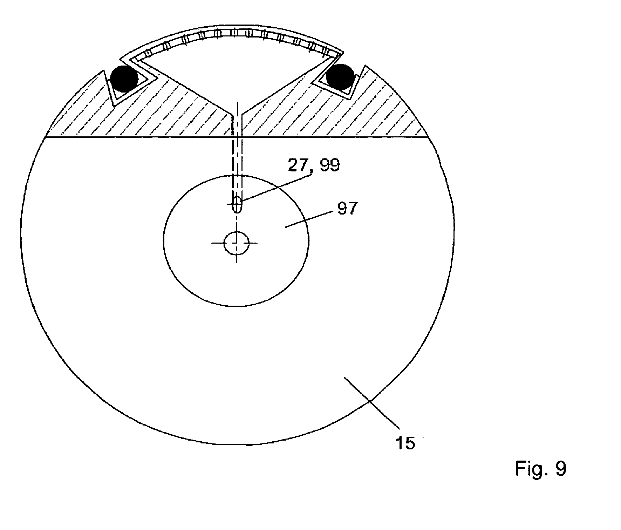

Figur 7 zeigt eine abgebrochene, geschnittene Seitenansicht einer Steuerbaueinheit 95 gemäß einem noch anderen Ausführungsbeispiel der Filtervorrichtung von Figuren 1 bis 5, wobei der Unterschied zu der in den Figuren 1 bis 5 gezeigten Ausführungsform der Erfindung darin liegt, dass die Steuerscheibe 93 und die Dichtscheibe 97 der Steuerbaueinheit 95 nicht in einem bezüglich der Rotationsachse 5 axialen Dreheingriff/Gleitkontakt miteinander sind, sondern dass sie in einem Radialdreheingriff/Radialgleitkontakt miteinander sind. Gemäß der Ausführungsform von Figur 7 ist hierzu im Rotationskörper eine dem Lagerschaft 7 zugewandte Kreiszylinder-Aussparung ausgebildet, welche, wie auch der Lagerschaft 7, mit ihrer Umfangswand konzentrisch zur Rotationsachse 5 ausgebildet ist. Die Dichtscheibe 97 ist integral in der Umfangswand der Kreiszylinder-Aussparung ausgebildet und ist im Dreheingriff/Gleitkontakt mit der Steuerscheibe 93, die sich in Form eines Rings konzentrisch um den Lagerschaft 7 herum erstreckt und drehfest am Gehäuse 11 angebracht ist. Entgegen der Ausführungsformen von Figuren 1-5, bei welchen die Steuerscheibe 93 und die Dichtscheibe 97 bzgl. der Rotationsachse 5 in einem axialen Dreheingriff miteinander stehen, sind die Steuerscheibe 93 und die Dichtscheibe 97 bei der Ausführungsform von Figur 9 in einem fluiddichten radialen Dreheingriff/Gleitkontakt. Demgemäß weisen die Durchgangsöffnungen/Mündungsöffnungen 99, 27 in der Dichtscheibe/im Rotationskörper 97, 15 sowie die Steueröffnungen 101 in der Steuerscheibe 93 in eine radiale Richtung (bzgl. der Rotationsachse 5) und sind in dieser Ausführungsform in der Innenwandung der Kreiszylinder-Aussparung bzw. in der Außenumfangswandung der Steuerscheibe 93 ausgebildet.

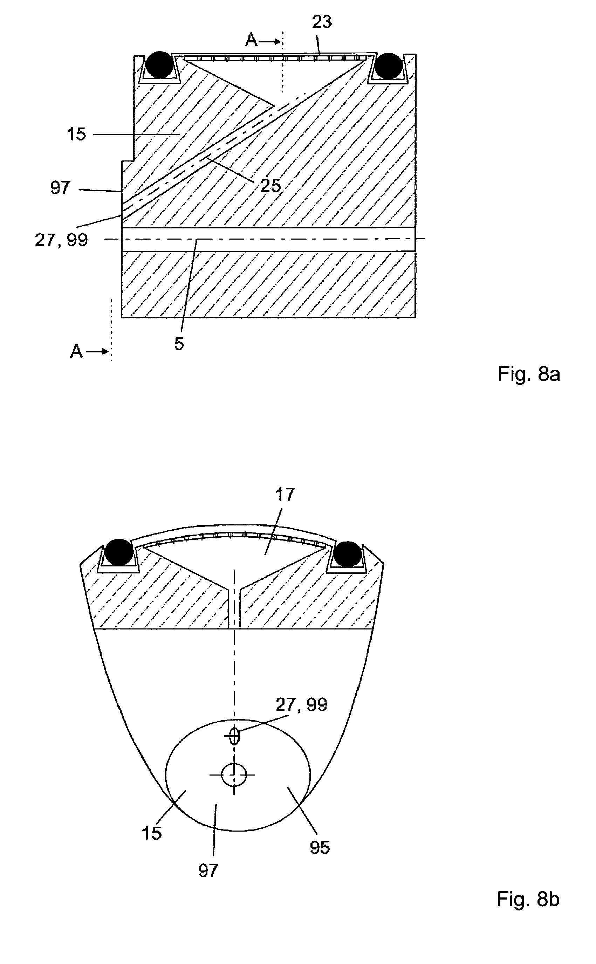

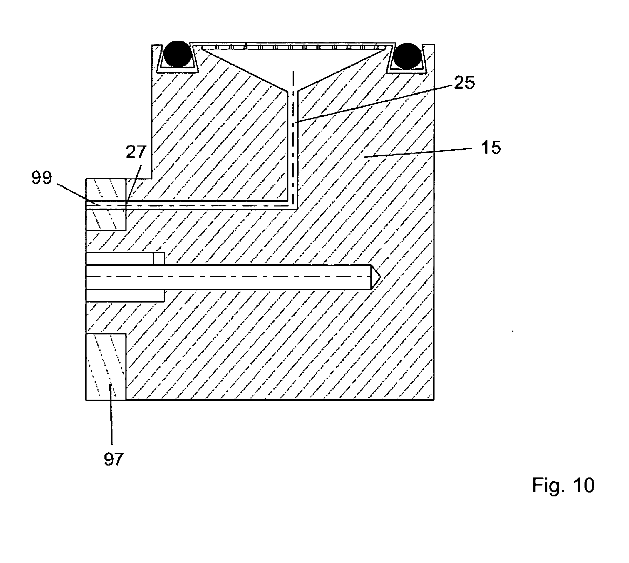

Figuren 8a und 8b zeigen eine schematische, geschnittene Seitenansicht bzw. eine schematische Frontansicht eines Rotationskörpers 15 gemäß einem anderen Ausführungsbeispiel der Filtervorrichtung 1 von Figuren 1 bis 5, wobei entsprechend der Ausführungsform von Figuren 1 und 2 und im Unterschied zu dem Ausführungsbeispiel von Figuren 3 und 4 der Rotationskörper 15 als Einzel-Filterzelle-Rotationskörper mit nur einer Filterzelle 17 ausgebildet ist. Demgemäß befindet sich in der Dichtscheibe 97 der Steuerbaueinheit 95 (von welcher in den Figuren 8a, 8b nur die Dichtscheibe 97 gezeigt ist) nur eine Durchgangsöffnung 99 bzw. Mündungsöffnung 27, in welcher der von der Filterzelle 17 ausgehende Verbindungskanal 25 ausmündet. Die Steuerbaueinheit 95 kann ansonsten wie in den Figuren 1 bis 5 dargestellt ausgebildet sein. Aufgrund der Verwendung von nur einer einzelnen Filterzelle 17 kann z.B. auf eine trommelförmige Ausbildung des Rotationskörpers 15 verzichtet werden. In den Figuren 8a, 8b ist der Rotationskörper 15 z.B. als Zylindersegmentkörper ausgebildet. Der Verbindungskanal 25, der die Filtermittelausgangsseite 23 mit der Steuerscheibe 97 verbindet, verläuft in dieser Ausführungsform in einem Winkel zu sowohl der Rotationsachse 5 als auch zu der Senkrechten zur Rotationsachse 5. Der Verbindungskanal 25 kann aber auch z.B. einen ersten Kanalabschnitt aufweisen, der sich von der Filtermittelausgangsseite 23 der Filterzelle 17 aus im Wesentlichen senkrecht zur Rotationsachse 5 nach innen erstreckt, und einen zweiten Kanalabschnitt aufweisen, der sich ausgehend vom ersten Kanalabschnitt parallel zur Rotationsachse 5 zur Mündungsöffnung 27 erstreckt (vgl. auch Ausführungsform von Figur 10).

Figur 9 zeigt eine schematische, geschnittene Seitenansicht eines Rotationskörpers 15 gemäß einem noch anderen Ausführungsbeispiel der Filtervorrichtung von Figuren 1 und 2, wobei der Unterschied zu der Ausführungsform von Figuren 1 und 2 lediglich darin liegt, dass der trommelförmige Rotationskörper 15 eine daran als axialer Vorsprung (in Richtung zu der Steuerscheibe 93 axial vorstehend) (wie z.B. im Ausführungsbeispiel von Figur 4 der Fall) ausgebildete Dichtscheibe 97 aufweist, in welcher die Mündungsöffnung 27 integral mit der Durchgangsöffnung 99 ausgebildet ist.

Figur 10 zeigt eine schematische, geschnittene Seitenansicht eines Rotationskörpers 15 gemäß einem noch anderen Ausführungsbeispiel der Filtervorrichtung von Figuren 1 und 2, wobei die Dichtscheibe 97 nicht integral mit dem Rotationskörper 15 ausgebildet ist, sondern ein separates Bauteil ist, dass drehfest an dem Rotationskörper 15 angebracht, z.B. an diesen angeschraubt ist. Der Verbindungskanal 25 verläuft wie oben erläutert rechtwinklig zur Mündungsöffnung 27 hin. Die Durchgangsöffnung 99 in der Dichtscheibe 97 ist (radial) überlappend, im vorliegenden Falle axial fluchtend, zu der Mündungsöffnung 27 angeordnet.

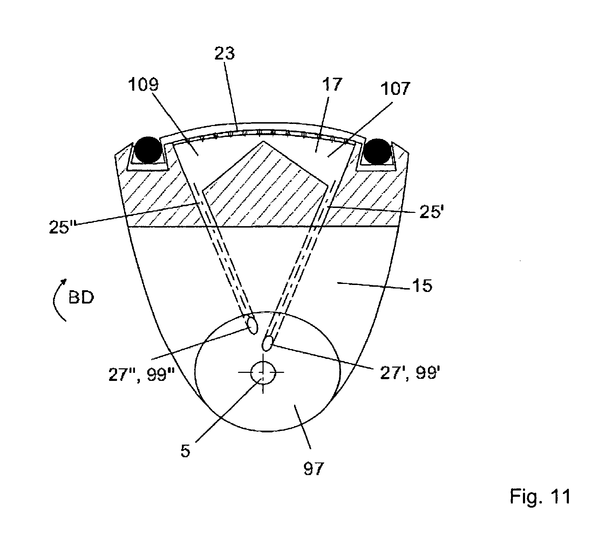

Figur 11 zeigt eine schematische, geschnittene Seitenansicht eines Rotationskörpers 15 gemäß einem noch anderen Ausführungsbeispiel der Filtervorrichtung von Figuren 1 und 2, wobei die Filterzelle 17 in diesem Ausführungsbeispiel einen Filtermittelausgangsseite 23 der Filterzelle 17 aus im Wesentlichen senkrecht zur Rotationsachse 5 nach innen erstreckt, und einen zweiten Kanalabschnitt aufweisen, der sich ausgehend vom ersten Kanalabschnitt parallel zur Rotationsachse 5 zur Mündungsöffnung 27 erstreckt (vgl. auch Ausführungsform von Figur 12).

Figur 11 zeigt eine schematische, geschnittene Seitenansicht eines Rotationskörpers 15 gemäß einem noch anderen Ausführungsbeispiel der Filtervorrichtung von Figuren 1 und 2, wobei der Unterschied zu der Ausführungsform von Figuren 1 und 2 lediglich darin liegt, dass der trommelförmige Rotationskörper 15 eine daran als axialer Vorsprung (in Richtung zu der Steuerscheibe 93 axial vorstehend) (wie z.B. im Ausführungsbeispiel von Fig. 4 der Fall) ausgebildete Dichtscheibe 97 aufweist, in welcher die Mündungsöffnung 27 integral mit der Durchgangsöffnung 99 ausgebildet ist.

Figur 12 zeigt eine schematische, geschnittene Seitenansicht eines Rotationskörpers 15 gemäß einem noch anderen Ausführungsbeispiel der Filtervorrichtung von Figuren 1 und 2, wobei die Dichtscheibe 97 nicht integral mit dem Rotationskörper 15 ausgebildet ist, sondern ein separates Bauteil ist, dass drehfest an dem Rotationskörper 15 angebracht, z.B. an diesen angeschraubt ist. Der Verbindungskanal 25 verläuft wie oben erläutert rechtwinklig zur Mündungsöffnung 27 hin. Die Durchgangsöffnung 99 in der Dichtscheibe 97 ist (radial) überlappend, im vorliegenden Falle axial fluchtend, zu der Mündungsöffnung 27 angeordnet.

Figur 13 zeigt eine schematische, geschnittene Seitenansicht eines Rotationskörpers 15 gemäß einem noch anderen Ausführungsbeispiel der Filtervorrichtung von Figuren 1 und 2, wobei die Filterzelle 17 in diesem Ausführungsbeispiel einen ersten Verbindungskanal 25' und einen zweiten Verbindungskanal 25" aufweist, die sich von der Filtermittelausgangsseite 23 der Filterzelle 17 aus zu einer jeweils zugeordneten ersten bzw. zweiten Mündungsöffnung 27', 27" erstrecken. Indem die Dichtscheibe 97 in dieser Ausführungsform integral mit dem Rotationskörper ausgebildet ist, stellen die Mündungsöffnungen 27', 27" auch gleichzeitig die Durchgangsöffnungen 99', 99" der Dichtscheibe 97 dar. Der Rotationskörper 15 kann auch als Mehrfach-Filterzellen-Rotationskörper mit mehreren Filterzellen 17 ausgebildet sein, von denen sich jeweils entsprechend ein erster und ein zweiter Verbindungskanal aus erstrecken. Die erste(n) Mündungsöffnung(en) 27' ist(sind) in einem Radialabstand (bzgl. der Rotationsachse 5) zu der(den) zweiten Mündungsöffnung(en) 27" angeordnet, wobei keine radiale Überlappung vorliegt. Damit können der(den) ersten Mündungsöffnung(en) 27' und der(den) zweiten Mündungsöffnung(en) 27" entsprechend separate/unabhängige Steueröffnungen der Steuerscheibe 93 zugeordnet sein, von denen z.B. die der(den) ersten Mündungsöffnung(en)/Durchgangsöffnung(en) 27', 99' zugeordneten Steueröffnungen der Abführung und Zuführung von gasförmigem Fluid (Feuchtgas beim Trocken des ausgefilterten Feststoffs oder Druckluft zum Absprengen des ausgefilterten Feststoffs vom Rotationskörper) dienen und von denen z.B. die der(den) zweiten Mündungsöffnung(en)/Durchgangsöffnung(en) 27", 99" zugeordneten Steueröffnungen der Abführung von flüssigem Fluid (z.B. Flüssigkeit aus dem Gemisch oder Waschflüssigkeit) dienen. Der (jeweilige) erste Verbindungskanal 25', der z.B. dem Transfer von gasförmigem Fluid dient, kann z.B. an einem in Rotationsrichtung bzw. Betriebsdrehrichtung (Pfeil BD) vorlaufenden Endabschnitt 107 der Filterzelle 17 angeordnet sein, und der (jeweilige) zweite Verbindungskanal 25", der z.B. dem Transfer von durch die Filterzelle 17 abgetrennter Gemisch-Flüssigkeit dient, kann z.B. an einem in Rotationsrichtung bzw. Betriebsdrehrichtung (Pfeil BD) nachlaufenden Endabschnitt 109 der Filterzelle 17 angeordnet sein. Damit sammelt sich die aus dem Feststoff-Flüssigkeit-Gemisch abgetrennte Flüssigkeit im nachlaufenden Endabschnitt 109 der Filterzelle 17 (bis zum oberen Rotations-Umkehrpunkt der Filterzelle 17), um von dort via den zweiten Verbindungskanal 25" zuverlässig abgeführt zu werden, und über den vorlaufenden Endabschnitt 107 der Filterzelle 17 kann, z.B. nachdem die Filterzelle 17 den oberen Rotations-Umkehrpunkt überschritten hat, Feuchtgas abgeführt oder Druckluft zugeführt werden.

In den obigen Ausführungsbeispielen wurde der Rotationskörper 15 als einseitig gelagerter Rotationskörper 15 beschrieben. In Figur 1 ist in Punkt-Strich-Linie eine Variante eingezeichnet, wonach der Rotationskörper 15 auch über ein Hilfslager 100 auf seiner von der Lagerung 9 abgewandten Axialseite (bezüglich der Rotationsachse 5) drehbar gehalten ist. Das Hilfslager 100 ist in dieser Ausführungsform am Gehäusedeckel 45 angebracht, sodass es mit Abnehmen des Gehäusedeckels 45 automatisch vom Rotationskörper 15 abgenommen wird.

Gemäß einer weiter bevorzugten Ausführungsform wird eine Filtervorrichtung 1 zum Ausfiltern von Feststoff aus einem Feststoff-Flüssigkeit-Gemisch bereitgestellt 3, mit einem sich entlang einer Rotationsachse 5 erstreckenden Lagerschaft 7, einem am Lagerschaft 7 abnehmbar angebrachten und mittels des Lagerschafts 7 um die Rotationsachse 5 rotierbar gelagerten Rotationskörper 15, mehreren Filterzellen 17, welche jeweilig am Rotationskörper 15 ausgebildet sind und jeweils aufweisen: ein am Rotationskörper 15 angebrachtes Filtermittel 19 zum Ausfiltern des Feststoffs aus dem Feststoff-Flüssigkeit-Gemisch 3 unter Passieren-Lassen der Flüssigkeit des Feststoff-Flüssigkeit-Gemischs 3 von einer Filtermitteleingangsseite 21 zu einer Filtermittelausgangsseite 23 und einen Verbindungskanal 25, der im Rotationskörper ausgebildet ist und sich von der Filtermittelausgangsseite 23 zu einer Mündungsöffnung 27 erstreckt, die an einer Axialseite des Rotationskörpers 15 im Radialabstand zu der Rotationsachse 5 ausgebildet ist, einer Steuereinrichtung 33 mit einer Steuerbaueinheit 95 zum gesteuerten Herstellen einer Verbindung zwischen der jeweiligen Mündungsöffnung 27 und einer Mehrzahl von Leitungen F, wobei die Steuerbaueinheit 95 aufweist: eine mit dem Rotationskörper 15 mitdrehbar ausgebildete Dichtscheibe (97), in welcher zu der jeweiligen Mündungsöffnung 27 korrespondierend jeweils eine Durchgangsöffnung 99 ausgebildet ist, und eine mit der Dichtscheibe 97 in einem fluiddichten Gleitrotationseingriff stehende stationäre Steuerscheibe 93, in welcher mit einer jeweiligen Leitung F verbundene Steueröffnungen 101 ausgebildet sind, die in Abhängigkeit von der Rotationsposition des Rotationskörpers 15 mit der jeweiligen Durchgangsöffnung 99 der Dichtscheibe 97 verbunden sind, um die Filtermittelausgangsseite 23 der jeweiligen Filterzelle 17 in Abhängigkeit von der Rotationsposition des Rotationskörpers 15 mit der jeweiligen Leitung zu verbinden F, und einem Gehäuse 11 mit einem den Rotationskörper 15 (komplett) aufnehmenden Gehäuseinnenraum 12, wobei das Gehäuse 11 einen unteren Gehäuseabschnitt 47 aufweist, welcher einen Aufnahmeraum 48 zur Aufnahme des Feststoff-Flüssigkeits-Gemisches 3 definiert, wobei der Aufnahmeraum 48 und der den Rotationskörper 15 aufnehmende Gehäuseinnenraum 12 eine von der gleichen Gehäusewand begrenzte Raumeinheit bilden. Die die Steuerscheibe 93 und/oder die Dichtscheibe 97 kann z.B. ein vom Gehäuse 11 separates und auswechselbares Bauteil ausgebildet sein. Der Rotationskörper 15 und die Dichtscheibe 97 sind z.B. derart auseinanderbaubar angebracht, dass beim Abnehmen des Rotationskörpers 15 vom Lagerschaft 7, die Dichtscheibe 97 automatisch von der Steuerscheibe 93 getrennt wird und zusammen mit dem Rotationskörper 15 vom Lagerschaft 7 abnehmbar ist. Die jeweilige Filterzelle 17 weist z.B. einen ersten und einen zweiten im Rotationskörper ausgebildeten Verbindungskanal 25', 25" auf, die sich jeweils von der Filtermittelausgangsseite 23 zu einer ersten bzw. einer zweiten Mündungsöffnung 27', 27" erstrecken, die an einer dem Lagerschaft 7 zugewandten Axialseite des Rotationskörpers 15 im Radialabstand zu der Rotationsachse 5 ausgebildet sind, wobei die erste und die zweite Mündungsöffnung 27', 27" bezüglich der Rotationsachse 5 in einem Radialabstand sowohl zur Rotationachse 5 als auch zueinander angeordnet sind, wobei sie sich in Radialrichtung nicht überlappen. Die Filtervorrichtung 1 weist z.B. ferner ein abgedichtetes Gehäuse auf, in welchem der Rotationskörper 15 aufgenommen ist, wobei das Gehäuse 11 auf einer vom Lagerschaft 7 abgewandten Axialseite eine von einem abnehmbaren Gehäusedeckel 45 verschließbare Gehäuseöffnung 43 aufweist, durch welche hindurch der Rotationskörper 15 in Axialrichtung der Rotationsachse 5 aus dem Gehäuse 11 entnehmbar ist. Die jeweilige Filterzelle 17 weist z.B. auf Seiten der Filtermittelausgangsseite 23 eine im Außenumfang des Rotationskörpers 15 ausgebildete Filtertasche 75 auf, die sich in Richtung zu dem zugehörigen Verbindungskanal verjüngt 25. Der Verbindungskanal 25 der jeweiligen Filterzelle 17 hat z.B. einen von der Filtermittelausgangsseite 23 aus sich senkrecht zur Rotationsachse 5 erstreckenden ersten Kanalabschnitt und einen sich vom ersten Kanalabschnitt zu der Mündungsöffnung 27 hin parallel zur Rotationsachse erstreckenden zweiten Kanalabschnitt, oder der Verbindungskanal 25 der jeweiligen Filterzelle 17 erstreckt sich z.B. von der Filtermittelausgangsseite 23 zu seiner Mündungsöffnung 27 hin in einem Winkel zur Rotationsachse 5 sowie zu deren Senkrechten erstreckt. Der Lagerschaft 7 ist z.B. als drehend angetriebene Drehwelle ausgebildet, mit welcher der Rotationskörper 15 drehfest verbunden ist. Der Rotationskörper 15 ist z.B. über eine Schnellverschluss-Steckkupplung 73 oder Schnellverschluss-Schraubkupplung mit dem Ende des Lagerschafts 15 gekuppelt.

Obwohl die Erfindung vorstehend anhand von Ausführungsbeispielen erläutert wurde, ist es für den Fachmann verständlich, dass die Erfindung nicht auf diese Ausführungsbeispiele eingeschränkt ist, sondern dass sie noch weitere Modifikationen und Abwandlungen erfasst, insofern vom durch die Ansprüche definierten Schutzumfang umfasst.

## Patentansprüche

1. Filtervorrichtung (1) zum Ausfiltern von Feststoff aus einem Feststoff-Flüssigkeit-Gemisch (3), mit
einem sich entlang einer Rotationsachse (5) erstreckenden Lagerschaft (7),
einem am Lagerschaft (7) abnehmbar angebrachten und mittels des Lagerschafts (7) um die Rotationsachse (5) rotierbar gelagerten Rotationskörper (15), der in Form einer Zylindertrommel oder eines zylindertrommelsegments ausgebildet ist,
einer oder mehreren Filterzellen (17), welche jeweilig am Außenumfang des Rotationskörpers (15) ausgebildet sind und jeweils aufweisen: ein am Außenumfang des Rotationskörpers (15) angebrachtes Filtermittel (19) zum Ausfiltern des Feststoffs aus dem Feststoff-Flüssigkeit-Gemisch (3) unter Passieren-Lassen der Flüssigkeit des Feststoff-Flüssigkeit-Gemischs (3) von einer Filtermitteleingangsseite (21) zu einer Filtermittelausgangsseite (23), wobei sich der Feststoff an der Außenseite des Filtermittels (19) ablagert, und einen Verbindungskanal (25), der im Rotationskörper ausgebildet ist und sich von der Filtermittelausgangsseite (23) zu einer Mündungsöffnung (27) erstreckt, die an einer Axialseite des Rotationskörpers (15) im Radialabstand zu der Rotationsachse (5) ausgebildet ist,
einer Steuereinrichtung (33) mit einer Steuerbaueinheit (95) zum gesteuerten Herstellen einer Verbindung zwischen der jeweiligen Mündungsöffnung (27) und einer Mehrzahl von Leitungen (F), wobei die Steuerbaueinheit (95) aufweist: eine mit dem Rotationskörper (15) mitdrehbar ausgebildete Dichtscheibe (97), in welcher zu der jeweiligen Mündungsöffnung (27) korrespondierend jeweils eine Durchgangsöffnung (99) ausgebildet ist, und eine mit der Dichtscheibe (97) in einem fluiddichten Gleitrotationseingriff stehende stationäre Steuerscheibe (93), in welcher mit einer jeweiligen Leitung (F) verbundene Steueröffnungen (101) ausgebildet sind, die in Abhängigkeit von der Rotationsposition des Rotationskörpers (15) mit der jeweiligen Durchgangsöffnung (99) der Dichtscheibe (97) verbunden sind, um die Filtermittelausgangsseite (23) der jeweiligen Filterzelle (17) in Abhängigkeit von der Rotationsposition des Rotationskörpers (15) mit der jeweiligen Leitung zu verbinden (F), und
einem Gehäuse (11) mit einem den Rotationskörper (15) komplett aufnehmenden Gehäuseinnenraum (12), wobei die Steuerbaueinheit (95) im Gehäuse (11) axial zwischen einer den Gehäuseinnenraum (12) axial begrenzenden, quer zur Rotationsachse (5) verlaufenden Gehäusewandung (67) und dem Rotationskörper (15) angeordnet ist, und wobei der Lagerschaft (7) ein freies Ende (13) aufweist, wobei der Rotationskörper (15) am freien Ende (13) des Lagerschafts (7) abnehmbar angebracht sowie mittels des Lagerschafts (7) nur einseitig über eine Lagerung (9) gelagert ist,
wobei die von der Steuerscheibe (93) ausgehend abgezweigten Leitungen (F) in einer Richtung in etwa parallel zur Rotationsachse (5) durch die quer zur Rotationsachse (5) verlaufende Gehäusewandung (67) in Richtung weg vom Rotationskörper (15) verlaufend ausgebildet sind, wobei sich die Leitungen (F) in einem Radialabstand vom Lagerschaft (7) sowie auch in einem Radialabstand zur Lagerung (9) radial außerhalb davon erstrecken.

2. Filtervorrichtung (1) gemäß Anspruch 1, wobei die Lagerung (9) an der Gehäusewandung (67) angebracht ist.

3. Filtervorrichtung (1) gemäß Anspruch 1, wobei die Gehäusewandung (67) auf Seiten des Lagerschafts (7) angeordnet ist.

4. Filtervorrichtung (1) gemäß einem der Ansprüche 1-3, wobei die Steuerbaueinheit (95) zwischen einer den Lagerschaft (7) lagernden Lagerung (9) und dem Rotationskörper (15) angeordnet ist.

5. Filtervorrichtung (1) gemäß einem der Ansprüche 1-4, wobei die Dichtscheibe (97) stofflich einstückig mit dem Rotationskörper (15) ausgebildet ist.

6. Filtervorrichtung (1) gemäß einem der Ansprüche 1-5, wobei das Gehäuse (11) einen unteren Gehäuseabschnitt (47) aufweist, welcher einen Aufnahmeraum (48) zur Aufnahme des Feststoff-Flüssigkeits-Gemisches (3) definiert, wobei der Aufnahmeraum (48) und der den Rotationskörper (15) aufnehmende Gehäuseinnenraum (12) eine von der gleichen Gehäusewand begrenzte Raumeinheit bilden.

7. Filtervorrichtung (1) gemäß irgendeinem der Ansprüche 1-6, wobei die Steuerscheibe (93) und/oder die Dichtscheibe (97) als ein vom Gehäuse (11) separates und auswechselbares Bauteil ausgebildet ist.

8. Filtervorrichtung (1) gemäß irgendeinem der Ansprüche 1-7, wobei der Rotationskörper (15) und die Dichtscheibe (97) derart auseinanderbaubar angebracht sind, dass beim Abnehmen des Rotationskörpers (15) vom Lagerschaft (7), die Dichtscheibe (97) automatisch von der Steuerscheibe (93) getrennt wird und zusammen mit dem Rotationskörper (15) vom Lagerschaft (7) abnehmbar ist.

9. Filtervorrichtung (1) gemäß irgendeinem der Ansprüche 1-8, wobei die jeweilige Filterzelle (17) einen ersten und einen zweiten im Rotationskörper ausgebildeten Verbindungskanal (25', 25") aufweist, die sich jeweils von der Filtermittelausgangsseite (23) zu einer ersten bzw. einer zweiten Mündungsöffnung (27', 27") erstrecken, die an einer dem Lagerschaft (7) zugewandten Axialseite des Rotationskörpers (15) im Radialabstand zu der Rotationsachse (5) ausgebildet sind, wobei die erste und die zweite Mündungsöffnung (27', 27") bezüglich der Rotationsachse (5) in einem Radialabstand sowohl zur Rotationachse (5) als auch zueinander angeordnet sind, wobei sie sich in Radialrichtung nicht überlappen.

10. Filtervorrichtung (1) gemäß irgendeinem der vorhergehenden Ansprüche, ferner aufweisend ein abgedichtetes Gehäuse (11), in welchem der Rotationskörper (15) aufgenommen ist, wobei das Gehäuse (11) auf einer vom Lagerschaft (7) abgewandten Axialseite eine von einem abnehmbaren Gehäusedeckel (45) verschließbare Gehäuseöffnung (43) aufweist, durch welche hindurch der Rotationskörper (15) in Axialrichtung der Rotationsachse (5) aus dem Gehäuse (11) entnehmbar ist.

11. Filtervorrichtung (1) gemäß irgendeinem der vorhergehenden Ansprüche, wobei die jeweilige Filterzelle (17) auf Seiten der Filtermittelausgangsseite (23) eine im Außenumfang des Rotationskörpers (15) ausgebildete Filtertasche (75) aufweist, die sich in Richtung zu dem zugehörigen Verbindungskanal verjüngt (25).

12. Filtervorrichtung (1) gemäß irgendeinem der vorhergehenden Ansprüche, wobei der Verbindungskanal (25) der jeweiligen Filterzelle (17) einen von der Filtermittelausgangsseite (23) aus sich senkrecht zur Rotationsachse (5) erstreckenden ersten Kanalabschnitt und einen sich vom ersten Kanalabschnitt zu der Mündungsöffnung (27) hin parallel zur Rotationsachse erstreckenden zweiten Kanalabschnitt hat, oder wobei der Verbindungskanal (25) der jeweiligen Filterzelle (17) sich von der Filtermittelausgangsseite (23) zu seiner Mündungsöffnung (27) hin in einem Winkel zur Rotationsachse (5) sowie zu deren Senkrechten erstreckt.

13. Filtervorrichtung (1) gemäß irgendeinem der vorhergehenden Ansprüche, wobei der Lagerschaft (7) als drehend angetriebene Drehwelle ausgebildet ist, mit welcher der Rotationskörper (15) drehfest verbunden ist.

## Claims

1. Filter device (1) for filtering out solid material from a solid-liquid-mixture (3), comprising
a bearing shaft (7) which extends along a rotation axis (5),
a rotation body (15) which is detachably mounted to the bearing shaft (7) and which is supported by the bearing shaft (7) so as to be rotatable around the rotation axis (5), which bearing shaft (7) is formed in form of a cylinder drum or a cylinder drum segment,
one or more filter cells (17) which are respectively formed on the outer periphery of the rotation body (15) and which respectively comprise: a filter means (19) which is attached on the outer periphery of the rotation body (15) and which is for filtering out the solid material from the solid-liquid-mixture (3), wherein the liquid of the solid-liquid-mixture (3) is allowed to pass from a filter means inlet side (21) to a filter means outlet side (23), wherein the solid material accumulates on the outer side of the filter means (19), and a connection channel (25) which is formed in the rotation body and which extends from the filter means outlet side (23) to a spout opening (27) which is formed on an axial side of the rotation body (15) in a radial distance to the rotation axis (5),
a control device (33) which has a control assembly (95) for controllably providing a connection between the respective spout opening (27) and a plurality of conduits (F), wherein the control assembly (95) comprises: a sealing disc (97) which is formed to be co-rotatable with the rotation body (15) and in which a through opening (99) is respectively formed in correspondence to the respective spout opening (27), and a control disc (93) which is in a fluid-tight sliding rotational engagement with the sealing disc (97) and in which control openings (101) are formed, which are connected to a respective conduit (F) and which are connected to the respective through opening (99) of the sealing disc (97) in dependence on the rotation position of the rotation body (15) in order to connect the filter means outlet side (23) of the respective filter cell (17) with the respective conduit (F) in dependence on the rotation position of the rotation body (15), and
a housing (11) which comprises a housing interior (12) which completely accommodates the rotation body (15), wherein the control assembly (95) is arranged in the housing (11) axially between a housing wall (67), which axially delimits the housing interior and extends crossways to the rotation axis (5), and the rotation body (15), and wherein the bearing shaft (7) comprises a free end (13), wherein the rotation body (15) is detachably attached on the free end (13) of the bearing shaft (7) and is supported by means of the bearing shaft (7) via a bearing (9) only on one side,
wherein the conduits (F), which are branched-off from the control disc (93), are formed so as to extend in a direction approximately parallel to the rotational axis (5) through the housing wall (67), which extends crossways to the rotation axis (5), in direction away from the rotation body (15), wherein the conduits (F) extend in a radial distance to the bearing shaft (7) as well as in a radial distance to the bearing (9) radially outwardly thereof.

2. Filter device (1) according to claim 1, wherein the bearing (9) is attached on the housing wall (67).

3. Filter device (1) according to claim 1, wherein the housing wall (67) is arranged on the side of the bearing shaft (7).

4. Filter device (1) according to one of claims 1-3, wherein the control assembly (95) is arranged between a bearing (9) supporting the bearing shaft (7), and the rotation body (15).

5. Filter device (1) according to one of claims 1-4, wherein the sealing disc (97) is formed as materially one-piece with the rotation body (15).

6. Filter device (1) according to one of claims 1-5, wherein the housing (11) comprises a lower housing portion (47) which defines a receiving space (48) for receiving the solid-liquid-mixture (3), wherein the receiving space (48) and the housing interior (12) accommodating the rotation body (15) form a space unit delimited by the same housing wall.

7. Filter device (1) according to anyone of claims 1-6, wherein the control disc (93) and/or the sealing disc (97) is formed as a component which is separate from the housing (11) and which is exchangeable.

8. Filter device (1) according to anyone of claims 1-7, wherein the rotation body (15) and the sealing disc (97) are demountable from each other in such a manner that, when detaching the rotation body (15) from the bearing shaft (7), the sealing disc (97) will be automatically separated from the control disc (93) and is detachable from the bearing shaft (7) together with the rotation body (15).

9. Filter device (1) according to anyone of claims 1-8, wherein the respective filter cell (17) comprises a first and a second connection channel (25', 25") formed in the rotation body, which respectively extend from the filter means outlet side (23) to a first and a second spout opening (27'. 27"), respectively, which are formed on an axial side, which faces the bearing shaft (7), of the rotation body (15) in radial distance to the rotation axis (5), wherein the first and the second spout opening (27', 27") are arranged relative to the rotation axis (5) in a radial distance to the rotation axis (5) as well as to each other, wherein they do not overlap each other in radial direction.

10. Filter device (1) according to anyone of the preceding claims, further comprising a sealed housing (11), in which the rotation body (15) is accommodated, wherein the housing (11) comprises a housing opening (43) on an axial side facing away from the bearing shaft (7), which is closable by a detachable housing lid (45) and through which the rotation body (15) is removable from of the housing (11) in axial direction of the rotation axis (5).

11. Filter device (1) according to anyone of the preceding claims, wherein the respective filter cell (17) comprises a filter pocket (75) on the side of the filter means outlet side (23), which is formed in the outer periphery of the rotation body (15) and which tapers in direction to the corresponding connection channel (25).

12. Filter device (1) according to anyone of the preceding claims, wherein the connection channel (25) of the respective filter cell (17) has a first channel portion which extends perpendicularly to the rotation axis (5) from the filter means outlet side (23), and a second channel portion which extends parallel to the rotation axis from the first channel portion to the spout opening (27), or wherein the connection channel (25) of the respective filter cell (17) extends at an angle to the rotation axis (5) as well as to the perpendicular thereof from the filter means outlet side (23) to its spout opening (27).

13. Filter device (1) according to anyone of the preceding claims, wherein the bearing shaft (7) is formed a rotatably driven rotation shaft, with which the rotation body (15) is non-rotatably connected.

## Revendications

1. Dispositif de filtrage (1) pour extraire par filtrage la matière solide contenue dans un mélange solide-liquide (3), comportant
- une tige d'appui (7) s'étendant le long d'un axe de rotation (5),
- un corps rotatif (15), qui est monté de manière amovible sur la tige d'appui (7) et de manière à pouvoir tourner autour de l'axe de rotation (5) au moyen de la tige d'appui (7) et qui est réalisé sous la forme d'un tambour cylindrique ou d'un segment de tambour cylindrique,
- une ou plusieurs cellules de filtrage (17) qui sont réalisées chacune sur la périphérie extérieure du corps rotatif (15) et comportent chacune : un moyen de filtrage (19), monté sur la périphérie extérieure du corps rotatif (15) et destiné à extraire par filtrage la matière solide contenue dans le mélange solide-liquide (3) moyennant le passage du liquide du mélange solide-liquide (3) depuis un côté entrée (21) du moyen de filtrage vers un côté sortie (23) du moyen de filtrage, la matière solide se déposant sur la face extérieure du moyen de filtrage (19), et un canal de liaison (25) qui est réalisé dans le corps rotatif et s'étend depuis le côté sortie (23) du moyen de filtrage vers une bouche (27), qui est réalisée sur un côté axial du corps rotatif (15) à une distance radiale de l'axe de rotation (5),
- un dispositif de commande (33) avec un élément de commande (95) pour établir de manière commandée une liaison entre la bouche (27) respective et une pluralité de conduites (F), ledit élément de commande (95) comportant : un disque d'étanchéité (97), qui est réalisé pour tourner conjointement avec le corps rotatif (15) et dans lequel est réalisée une ouverture de passage (99) correspondant respectivement à la bouche (27) concernée, et un disque de commande (93) stationnaire, qui est en prise en glissement et rotation, de manière étanche au fluide, avec le disque d'étanchéité (97) et dans lequel sont réalisées des ouvertures de commande (101) qui sont reliées à une conduite (F) respective et, en fonction de la position de rotation du corps rotatif (15), sont reliées à l'ouverture de passage (99) concernée du disque d'étanchéité (97), afin de relier le côté sortie (23) du moyen de filtrage de la cellule de filtrage (17) concernée à la conduite (F) respective en fonction de la position de rotation du corps rotatif (15), et
- un carter (11) avec une volume intérieur (12) recevant complètement le corps rotatif (15), l'élément de commande (95) étant disposé dans le carter (11) axialement entre le corps rotatif (15) et une paroi (67) du carter délimitant axialement le volume intérieur (12) du carter et s'étendant transversalement à l'axe de rotation (5), et dans lequel la tige d'appui (7) a une extrémité libre (13), le corps rotatif (15) étant monté amovible à l'extrémité libre (13) de la tige d'appui (7) et étant monté au moyen de la tige d'appui (7) seulement sur un côté par l'intermédiaire d'un palier (9),
les conduites (F), qui partent du disque de commande (93), étant réalisées en s'étendant dans une direction sensiblement parallèle à l'axe de rotation (5) à travers la paroi (67) du carter, orientée transversalement à l'axe de rotation (5), dans une direction s'écartant du corps rotatif (15), lesdites conduites (F) s'étendant à une distance radiale de la tige d'appui (7) et aussi radialement en dehors de celle-ci à une distance radiale du palier (9).

2. Dispositif de filtrage (1) selon la revendication 1, dans lequel le palier (9) est disposé sur la paroi (67) du carter.

3. Dispositif de filtrage (1) selon la revendication 1, dans lequel la paroi (67) du carter est disposée sur des côtés de la tige d'appui (7).

4. Dispositif de filtrage (1) selon l'une des revendications 1 à 3, dans lequel l'élément de commande (95) est disposé entre un palier (9), supportant la tige d'appui (7), et le corps rotatif (15).

5. Dispositif de filtrage (1) selon l'une des revendications 1 à 4, dans lequel le disque d'étanchéité (97) est réalisé, sur le plan de la matière, d'un seul tenant avec le corps rotatif (15).

6. Dispositif de filtrage (1) selon l'une des revendications 1 à 5, dans lequel le carter (11) comporte une partie inférieure (47), qui définit une chambre de réception (48) destinée à recevoir le mélange solide-liquide (3), ladite chambre de réception (48) et le volume intérieur (12) du carter recevant le corps rotatif (15) formant une unité délimitée par la même paroi du carter.

7. Dispositif de filtrage (1) selon l'une quelconque des revendications 1 à 6, dans lequel le disque de commande (93) et/ou le disque d'étanchéité (97) sont réalisés sous la forme d'un élément séparé du carter (11) et amovible.

8. Dispositif de filtrage (1) selon l'une quelconque des revendications 1 à 7, dans lequel le corps rotatif (15) et le disque d'étanchéité (97) sont montés de manière à pouvoir être démontés, de telle sorte que lorsque corps rotatif (15) est enlevé de la tige d'appui (7), le disque d'étanchéité (97) est automatiquement séparé du disque de commande (93) et peut être enlevé de la tige d'appui (7) conjointement avec le corps rotatif (15).

9. Dispositif de filtrage (1) selon l'une quelconque des revendications 1 à 8, dans lequel chaque cellule de filtrage (17) comporte un premier et un deuxième canal de liaison (25', 25") réalisés dans le corps rotatif, lesquels s'étendent respectivement depuis le côté sortie (23) du moyen de filtrage vers une première ou une deuxième bouche (27', 27") qui sont réalisées sur un côté axial du corps rotatif (15), orienté vers la tige d'appui (7), à une distance radiale de l'axe de rotation (5), la première et la deuxième bouche (27', 27") étant disposées par rapport à l'axe de rotation (5) à une distance radiale de l'axe de rotation (5) et à une distance radiale l'une de l'autre, elles ne se chevauchant pas dans le sens radial.

10. Dispositif de filtrage (1) selon l'une quelconque des revendications précédentes, comportant, en outre, un carter (11) rendu étanche, dans lequel est logé le-corps rotatif (15), ledit carter (11) comportant, sur un côté axial détourné de la tige d'appui (7), une ouverture (43) qui peut être fermée par un couvercle (45) amovible et à travers laquelle le corps rotatif (15) peut être retiré du carter (11) dans le sens axial de l'axe de rotation (5).

11. Dispositif de filtrage (1) selon l'une quelconque des revendications précédentes, dans lequel chaque cellule de filtrage (17) comporte, sur le côté sortie (23) du moyen de filtrage, une poche de filtrage (75) qui est réalisée sur la périphérie extérieure du corps rotatif (15) et se rétrécit en direction du canal de liaison (25) correspondant.

12. Dispositif de filtrage (1) selon l'une quelconque des revendications précédentes, dans lequel le canal de liaison (25) de chaque cellule de filtrage (17) comporte une première partie, qui s'étend à partir du côté sortie (23) du moyen de filtrage perpendiculairement à l'axe de rotation (5), et une deuxième partie qui s'étend à partir de la première partie vers la bouche (27) parallèlement à l'axe de rotation, ou dans lequel le canal de liaison (25) de chaque cellule de filtrage (17) s'étend à partir du côté sortie (23) du moyen de filtrage vers une bouche (27) en formant un angle avec l'axe de rotation (5) et avec la verticale de celui-ci.

13. Dispositif de filtrage (1) selon l'une quelconque des revendications précédentes, dans lequel la tige d'appui (7) est réalisée sous la forme d'un arbre rotatif entraîné en rotation, auquel le corps rotatif (15) est relié de manière solidaire en rotation.
